# EUROPEAN PATENT SPECIFICATION

(11) **EP 3 334 235 B1**
(45) Date of publication and mention of the grant of the patent: **29.07.2026**
(21) Application number: 16834628.6
(22) Date of filing: 08.08.2016
(51) Int. Cl.: H04W 74/0808

(54) **METHOD AND DEVICE FOR COMPETING FOR ACCESS**
VERFAHREN UND VORRICHTUNG FÜR WETTBEWERB UM ZUGRIFF
PROCÉDÉ ET DISPOSITIF POUR SE DISPUTER UN ACCÈS

(30) Priority: 07.08.2015 CN 201510485514; 03.08.2016 CN 201610630612
(43) Date of publication of application: 13.06.2018
(73) Proprietor: Advanced Standard Communication LLC, Garland TX 75040 (US)
(72) Inventor: YANG, Ling, Shenzhen Guangdong 518057 (CN); GOU, Wei, Shenzhen Guangdong 518057 (CN); DAI, Bo, Shenzhen Guangdong 518057 (CN); PENG, Focai, Shenzhen Guangdong 518057 (CN); BI, Feng, Shenzhen Guangdong 518057 (CN); ZHAO, Yajun, Shenzhen Guangdong 518057 (CN); LI, Xincai, Shenzhen Guangdong 518057 (CN)
(74) Representative: Carpmaels & Ransford LLP
(86) International application number: PCT/CN2016/093896
(87) International publication number: WO 2017/025004

(56) References cited:
- EP-A1- 3 334 234
- WO-A2-2013/112983
- CN-A- 102 752 875
- CN-A- 104 539 405
- CN-A- 104 581 908
- US-A1- 2015 098 412
- "3rd Generation Partnership Project; Technical Specification Group Radio Access Network; Study on Licensed-Assisted Access to Unlicensed Spectrum; (Release 13)", 30 June 2015 (2015-06-30), XP050985895, Retrieved from the Internet <URL:http://www.3gpp.org/ftp/tsg_ran/WG1_RL1/DRAFT/> [retrieved on 20150630]
- INTEL CORPORATION: "Uplink transmission with LBT", 19 April 2015 (2015-04-19), XP050936083, Retrieved from the Internet <URL:http://www.3gpp.org/ftp/Meetings_3GPP_SYNC/RAN2/Docs/> [retrieved on 20150419]
- LG ELECTRONICS: "LBT operation for LAA UL", 16 May 2015 (2015-05-16), XP050973617, Retrieved from the Internet <URL:http://www.3gpp.org/ftp/tsg_ran/WG1_RL1/TSGR1_81/Docs/> [retrieved on 20150516]
- ERICSSON: "Further details on LBT for LAA", 8 February 2015 (2015-02-08), XP050933792, Retrieved from the Internet <URL:http://www.3gpp.org/ftp/Meetings_3GPP_SYNC/RAN1/Docs/> [retrieved on 20150208]
- 3GPP: "Frame Structure Design for LAA Considering LBT", 3GPP TSG RAN WG 1 MEETING #79 RL-144828, 21 November 2014 (2014-11-21), XP050875894

## Description

### TECHNICAL FIELD

The disclosure relates to the technical field of wireless communications, and particularly to contention-based access method and device.

### BACKGROUND

Along with rapid increase of data services, burden of data transmission born by carriers of a licensed spectrum also increases, and thus sharing data traffic in licensed carriers through carriers of an unlicensed spectrum becomes an important evolution direction of subsequent development of Long Term Evolution (LTE). The unlicensed spectrum has the following characteristics: the unlicensed spectrum does not have to be purchased, a spectrum resource is zero-cost, and the characteristic of no cost/low cost is achieved; both individuals and enterprises may participate in deployment, equipment of equipment manufacturers may be freely deployed, and the characteristics of low admission requirement and low cost are achieved; frequency bands such as 5GHz and 2.4GHz in the unlicensed spectrum are all available, and the characteristic of large available bandwidth is achieved; an unlicensed carrier has the characteristic of resource sharing, that is, when multiple different systems operate therein or different operating companies of the same system operate therein, some resource sharing manners may be considered to improve spectrum utilization efficiency; the unlicensed spectrum has the characteristic of multiple radio access technologies, i.e., different communication standards, difficulty in collaboration and diversified network topologies; the unlicensed spectrum has the characteristic of multiple radio access stations, i.e., large number of users, great difficulty in collaboration and high centralized management overhead; and the unlicensed spectrum has the characteristic of multiple applications, that is, it is mentioned that multiple services may operate therein, for example, Machine to Machine (M2M) and Vehicle to Vehicle (V2V). On the basis of the characteristics of the unlicensed spectrum, a project was set up for study in Release-13 (Rel-13) of the LTE system in September, 2014, and an important topic for discussion is use of carriers of an unlicensed spectrum by the LTE system for operation. Such a technology will enable the LTE system to use carriers of a present unlicensed spectrum, greatly improve a potential spectrum resource of the LTE system and enable the LTE system to achieve lower spectrum cost.

Use of an unlicensed spectrum resource by the LTE system must meet a regulation requirement of unlicensed carriers, that is, before the unlicensed carriers are used, Listen Before Talk (LBT) is required. Executing LBT may avoid an interference problem caused by simultaneous use of the unlicensed carrier by adjacent systems. It is well known that Uplink (UL) transmission in the LTE system is based on a mechanism of scheduling through a base station, and meanwhile, according to a regulation requirement of Europe, for UL transmission on an unlicensed carrier, an LBT mechanism is also required to be executed at first. At present, in a feasibility Study Item (SI) for a Licensed-Assisted Access (LAA) system, i.e. LTE using a license-exempt frequency band, the international organization for mobile communication standard makes such a conclusion that LBT with random back-off with variable size of contention window (LBT Cat4) is adopted for Downlink (DL), but does not make an explicit conclusion for UL LBT. In view that UL transmission is based on scheduling of a base station, when an LBT Cat4 mechanism the same as that used for the DL is adopted, there may be the problems of poor UL performance, low frequency efficiency and the like caused by difficulty in UL access and incapability in transmission of UL transmitted data.

3GPP TR36.889 V13.0.0 discloses listen-before-talk designs.

3GPP DRAFT R2-151102 discloses potential options for uplink transmission in the unlicensed carrier and RAN2 aspects on uplink LBT operation.

3GPP DRAFT R1-152735 discloses options and design principles for LBT operation for LAA UL transmission.

US2015/098412 A1 discloses methods, systems, apparatuses, and devices for wireless communication. From a plurality of physical carriers associated with a clear channel assessment (CCA) performed by a device, one of the physical carriers for which the CCA was successful may be identified. A virtual carrier associated with a wireless data transmission by the device may be mapped to the identified one of the physical carriers.

3GPP DRAFT R1-150584 discusses detailed solutions for the Listen-before-talk (LBT) phase in LAA in order to ensure fair coexistence with Wi-Fi and other LAA services as well as compliance with regulatory requirements.

### SUMMARY

Embodiments of the disclosure provide a contention-based access method and device, which adopt an LBT different from that used for DL and may at least solve the problems of poor UL performance and low spectrum efficiency caused by adoption of DL LBT for UL in the related solutions.

The invention is set out in the appended set of claims.

According to the disclosure, a contention-based access method and device is provided. The features of the method and device according to the present invention are defined in the independent claims, and the preferable features according to the present invention are defined in the dependent claims.

Additionally, a contention-based access method is provided, which may include that a transmission node acquires predefined information; and
the transmission node performs contention-based access according to the predefined information,
wherein the predefined information may include at least one of: a frame structure, a data transmission subframe location, a data type, dedicated indication signaling, a frame scheduling manner or data transmission.

Furthermore, the frame structure may include: a Frequency Division Duplex (FDD) frame structure; or, a Time Division Duplex (TDD) frame structure; or, a dynamically configured UL and DL frame structure.

Furthermore, when the predefined information includes the frame structure, the operation that the transmission node performs contention-based access according to the predefined information may include that:
for the FDD frame structure, or, the TDD frame structure, or, the dynamically configured UL and DL frame structure, the transmission node adopts LBT without a random back-off window or LBT with the random back-off window during contention-based access.

Furthermore, LBT with the random back-off window may include at least one of:
direct execution of evolution Clear Channel Assessment (eCCA),
execution of single Clear Channel Assessment (CCA) and eCCA, or
execution of eCCA with a defer period (which is also referred to as defer duration);
and/or, LBT without the random back-off window may include:
   execution of single CCA only, or,
   execution of single CCA for a preset number of times.

Furthermore, a random back-off value of eCCA may be N, N being a natural number.

Furthermore, when there are multiple contiguous UL subframes in the frame structure, the operation that the transmission node performs contention-based access according to the predefined information may include that:
before a first UL subframe, an LBT mechanism is executed for contention-based access on configured symbols having a number larger than and/or equal to a predetermined number; and for subsequent UL subframes, the LBT mechanism is executed for contention-based access on a last Orthogonal Frequency Division Multiplexing (OFDM) symbol of a previous subframe of a configured scheduling subframe or a preset frequency-domain resource pattern in the last OFDM symbol, wherein the predetermined number may be configured or predefined by a base station.

Furthermore, when a subframe for executing contention-based access is a special subframe during transmission on the first UL subframe, a preset number of OFDM symbols in a previous subframe of the first UL subframe may include:
a preset number of OFDM symbols in a Downlink Pilot Time Slot (DwPTS); or,
a preset number of OFDM symbols in a Guard Period (GP); or,
a preset number of OFDM symbols in an Uplink Pilot Time Slot (UpPTS),
wherein a minimum value of the preset number may be a last OFDM symbol of at least one of the DwPTS, the GP or the UpPTS; and a maximum value of the preset number may correspond to a number of symbols occupied by at least one of the DwPTS, the GP or the UpPTS respectively.

Furthermore, for one transmission burst, a first subframe may execute an LBT mechanism with the random back-off window, and a subsequent subframe may execute the LBT mechanism with the random back-off window; or,
for one transmission burst, a first subframe may execute the LBT mechanism with the random back-off window, and a subsequent subframe may execute an LBT mechanism without the random back-off window.

Furthermore, when there are multiple contiguous UL subframes, the operation that the transmission node performs contention-based access according to the predefined information may include that:
no matter whether previous subframes successfully execute LBT or not, next subframes immediately following the previous subframes perform CCA detection according to the LBT mechanism with the random back-off window; or,
no matter whether the LBT mechanism is executed successfully in the previous subframe, the next subframes perform CCA detection according to the LBT mechanism without the random back-off window; or,
when execution of the LBT mechanism is failed in the previous subframe, the next subframes perform CCA detection according to the LBT mechanism with the random back-off window; or,
when execution of the LBT mechanism is failed in the previous subframe, the next subframes perform CCA detection according to the LBT mechanism without the random back-off window; or,
when execution of the LBT mechanism is failed in the previous subframe, the next subframes perform CCA detection according to an LBT mechanism configured by the base station; or,
when execution of the LBT mechanism is failed in the previous subframe, the next subframes perform CCA detection according to the LBT mechanism, configured by the base station, without the random back-off window; or,
when execution of the LBT mechanism is failed in the previous subframe, the next subframes perform CCA detection according to the LBT mechanism, configured by the base station, with the random back-off window; or,
when execution of the LBT mechanism succeeds in the previous subframe, the next subframes perform CCA detection according to the LBT mechanism with the random back-off window; or,
when execution of the LBT mechanism succeeds in the previous subframe, the next subframes perform CCA detection according to the LBT mechanism without the random back-off window.

Furthermore, a duration of single CCA detection may be configured to be at least one of: 34µs, 25µs, 20µs, 18µs, 16µs, 9µs or 10µs.

Furthermore, a starting point of single CCA detection may be a fixed location or dynamic random location within a configured CCA detection time period.

Furthermore, the configured CCA detection time period may be divided into multiple time intervals.

Furthermore, when the starting location of single CCA detection is the fixed location, the starting location of single CCA detection may be a starting location of a specific time period of the multiple time intervals.

Furthermore, the specific time period, or, the fixed starting location of CCA detection may be determined in at least one of the following manners:
predefinition; notification to User Equipment (UE) by the base station through Downlink Control Information (DCI) signaling; predetermination by the base station and the UE; or, negotiation between transmission nodes; or, configuration.

Furthermore, when the starting location of single CCA detection is the dynamic random location, the starting location of single CCA detection may be one of:
a location randomly selected from the configured CCA detection time period; or,
a starting location of a time period randomly selected from the multiple time intervals in the configured CCA detection time period; or,
alocation randomly selected from the time period randomly selected from the multiple time intervals in the configured CCA detection time period; or,
alocation randomly selected from a fixed time period in the multiple time intervals in the configured CCA detection time period.

Furthermore, when single CCA detection is executed to determine that a channel is busy, single CCA detection may be continued to be executed, and when it is detected that a duration when the channel has kept idle for a set single CCA detection duration from a moment when the busy channel gets idle, it may be considered that CCA detection succeeds; or,
single CCA detection may be executed, and when detecting that the channel has kept idle for the preset single CCA detection duration, it may be considered that the CCA detection succeeds.

Furthermore, when detecting by single CCA detection that the channel is busy or CCA is failed to be executed,
a starting point of execution of single CCA detection next time may be determined in a manner that one point in the time intervals after the location where single CCA is executed last time is randomly selected as the starting point of execution of single CCA detection; or,
the starting point of execution of single CCA detection next time may be randomly selected from the configured CCA detection time period; or,
the starting point of execution of single CCA detection next time may be determined in a manner that a location where a busy state of the currently detected channel is ended is determined as the starting point of execution of single CCA detection.

Furthermore, in case of asynchrony or synchrony or unfair contention for channel access between transmission nodes, or, in case of unfair contention for channel access between systems, at least one of the following processing may be performed:
priorities or LBT mechanism methods for execution of LBT by the transmission nodes or the systems are adjusted;
starting locations of CCA detection executed by the transmission nodes or the systems are alternately changed; and
the starting locations of CCA detection are randomly selected between the transmission nodes or the systems.

Furthermore, the operation that the priorities or LBT mechanism methods for execution of LBT by the transmission nodes or the systems are adjusted may include at least one of the following operations:
the transmission nodes regulate priorities or LBT mechanisms for execution of LBT detection this time on the basis of last LBT detection results;
the transmission nodes regulate the priorities or LBT mechanisms for execution of LBT detection this time on the basis of results of LBT detection executed within a period of time;
the transmission nodes regulate the priorities or LBT mechanisms for execution of LBT detection this time on the basis of execution of the LBT mechanisms for a preset number of times; and
the transmission nodes regulate the priorities or LBT mechanisms for execution of LBT detection this time or remain idle for a preset period of time on the basis that an accumulated sum of time when LBT is successfully executed exceeds a preset threshold.

Furthermore, when the transmission nodes successfully execute last LBT, the priorities or LBT mechanisms for execution of LBT detection this time may be decreased; or,
when the transmission nodes fail to execute last LBT, the priorities or LBT mechanisms for execution of LBT detection this time may be increased; or,
when a number of times for which the transmission nodes successfully execute LBT detection within a period of time is larger than a preset threshold value, the priorities or LBT mechanisms for execution of LBT detection this time may be decreased; or,
when a number of times for which the transmission nodes fail to execute LBT detection within a period of time is larger than a preset threshold value, the priorities or LBT mechanisms for execution of LBT detection this time may be increased.

Furthermore, execution of single CCA detection for the preset number of times may include that:
the preset number of times is obtained by rounding a value obtained by dividing the configured CCA detection time period by the single CCA detection duration, or, is predefined;
during the configured CCA detection time period, a location of each single CCA detection is fixed or dynamic; and
when the location of each single CCA detection is dynamic, when it is detected that the channel has kept idle for a preset time within the configured CCA detection time period, it is determined that contention for a right to use an unlicensed carrier succeeds,
wherein the locations of single CCA detection of the preset number of times may be mutually contiguous, or mutually overlapped or mutually discontiguous; when it is determined by single CCA detection that the channel is idle, it may be determined that contention for the right to use the unlicensed carrier succeeds; and when it is determined by single CCA detection that the channel is busy, single CCA detection may be continued to be executed, and when it is detected that the channel is idle, it may be determined that contention for the right to use the unlicensed carrier succeeds.

Furthermore, the transmission node may randomly select the location of each single CCA detection from multiple single CCA detection locations within the configured CCA detection time period, or, may predefine and configure the multiple single CCA detection locations.

Furthermore, execution of eCCA with the defer period may include that:
the defer period is executed at first, and then eCCA is executed; or,
eCCA is executed at first, and when it is detected that the channel is busy, the defer period is executed,
wherein a duration of the defer period may be configured to be any one of:
   34 µs, 25 µs, 20 µs, 18 µs, 16 µs, 10 µs, 9 µs, 0 µs, an integral multiple of a duration of random back-off CCA detection in eCCA and one of combinations, obtained according to an addition operation, of these options; or
   the duration of random back-off CCA detection in eCCA may be 9µs or 10µs.

Furthermore, the operation that the defer period is executed at first and then eCCA is executed may include that:
detection in the defer period is executed, and when it is detected in the defer period that the channel is idle, random back-off CCA detection of eCCA is executed.

Furthermore, when it is detected in the defer period that the channel is idle, an operation of decrement by a preset number may be performed on the random back-off value N, or, no operation may be performed on the random back-off value N,
wherein the preset number may be a predefined numerical value; or, the preset number may be determined according to a number of times of preset-duration CCA detection executable during detection in the defer period and a value by which the random back-off value N is decreased when it is determined once by preset-duration CCA detection that the channel is idle.

Furthermore, when it is detected in the defer period that the channel is busy, the transmission node may continue executing CCA detection, and when it is detected that the channel has kept idle for a preset duration of the defer period, determine that the channel is idle during detection in the defer period.

Furthermore, when it is detected in the defer period that the channel is busy, the transmission node may continue executing CCA detection, and when it is detected that the channel has kept idle for the preset duration of the defer period, determine that the channel is idle during detection in the defer period.

Furthermore, the data type may include: a new data packet; or, a retransmitted data packet, wherein durations, corresponding to different types of data packets, of execution of parameters involved in the LBT mechanism may be different.

Furthermore, the duration, corresponding to the retransmitted data packet, of the parameters involved in LBT mechanism execution may be smaller than the duration, corresponding to the new data packet, of the parameters involved in LBT mechanism execution.

Furthermore, the dedicated indication signaling may include that:
the base station configures whether each function of LBT is enabled or not and specific parameters of LBT; or the transmission node determines whether each function of LBT is enabled or not and the specific parameter of LBT,
wherein whether each function of LBT is enabled or not may include: whether to adopt a dynamic exponential back-off window or not, whether to adopt a fixed contention back-off window or not, or whether there is a contention window or not; and the specific parameter of LBT may include at least one of: single CCA, eCCA, the defer period or the random back-off value N, N being a natural number.

Furthermore, the transmission node may acquire the specific parameter of LBT in one of the following manners:
the base station notifies the transmission node of the specific parameter for execution of LBT through UL grant information; or,
the transmission node determines the specific parameters of LBT according to a subframe ratio and OFDM symbols occupied by execution of corresponding LBT; or,
the specific parameters of LBT are predefined, and the transmission node directly acquire the predefined specific parameters of LBT.

Furthermore, the random back-off value N may be obtained in any one of the following manners:
configuration by the base station; presetting; or random generation by the transmission node according to a preset algorithm,
wherein a value range of the value N may be related to a length of the configurated CCA detection time period and a size of a contention window.

Furthermore, random generation of the random back-off value N according to the preset algorithm may include that:
a random number N is generated as the random back-off value N through a uniform distribution function; or,
a random number N is generated as the random back-off value N through a binomial distribution function; or,
a random number N is generated as the random back-off value N through a normal distribution function.

Furthermore, the frame scheduling manner may include at least one of: single-frame scheduling, multi-frame scheduling, self-scheduling or cross-carrier scheduling.

Furthermore, before the operation that the transmission node performs contention-based access according to the predefined information, the method may further include that:
when a base station with data to be sent executes DL LBT to obtain the right to use the unlicensed carrier by contention and sends DL data and UL grant information to the transmission node, the transmission node executes LBT before sending the UL data and after receiving the information sent by the base station; or,
after a base station with no data to be sent executes DL LBT to obtain the right to use the unlicensed carrier by contention, a reserved signal is sent to occupy the channel until a moment when the transmission node executes LBT or indication information is sent to notify the transmission node to execute LBT; or,
when the transmission node has a data service, the transmission node executes LBT according to a preset LBT location; or,
the transmission node executes LBT according to received grant information.

Furthermore, the transmission node may acquire the location where LBT is executed in a semi-static configuration or dynamic configuration manner.

Furthermore, semi-static configuration may include:
configuration through DCI; or, configuration in a subframe structure ratio manner.

Furthermore, dynamic configuration may include that: for the dynamically configured UL and DL frame structure, the base station dynamically notifies the transmission node according to a load condition.

Furthermore, the operation that the transmission node directly executes an eCCA random back-off process for contention-based access or a random back-off CCA detection process of eCCA may include that:
when it is determined by random back-off CCA detection in eCCA that the channel is idle, the transmission node performs a decrement operation on the random back-off value N, the transmission node judges whether the random back-off value N subjected to the decrement operation is equal to 0 or not, when a judgment result is YES, the transmission node uses the unlicensed carrier for data transmission, and if the judgment result is NO, the transmission node executes next random back-off CCA detection; or,
when it is determined by random back-off CCA detection in eCCA that the channel is idle, the transmission node judges whether the random back-off value N is equal to 0 or not, when a judgment result is YES, the transmission node uses the unlicensed carrier for data transmission, and when the judgment result is NO, the transmission node performs the decrement operation on the random back-off value N, and continues executing random back-off CCA detection in eCCA; and
when it is detected that the channel is busy, the transmission node executes next random back-off CCA detection.

Furthermore, the method may further include that:
when it is determined by random back-off CCA detection in eCCA that the channel is busy, the transmission node performs the defer period detection, and when it is detected in the defer period that the channel is busy, the transmission node performs next random back-off CCA detection;
when it is assessed in the defer period that the channel is idle, the transmission node performs the decrement operation on the random back-off value N, the transmission node judges whether the random back-off value N subjected to the decrement operation is equal to 0 or not, if a judgment result is YES, the transmission node uses the unlicensed carrier for data transmission, and if the judgment result is NO, the transmission node executes next random back-off CCA detection; or,
when it is assessed in the defer period that the channel is idle, the transmission node judges whether the random back-off value N is equal to 0 or not, when a judgment result is YES, the transmission node uses the unlicensed carrier for data transmission, and when the judgment result is NO, the transmission node performs the decrement operation on the random back-off value N, and the transmission node performs next random back-off CCA detection.

Furthermore, the method may further include that:
if it is determined by random back-off CCA detection in eCCA that the channel is busy, the transmission node performs the defer period detection, when it is detected in the defer period that the channel is idle, executes the operation of decrement by the preset number on the random back-off value N, and judges whether the random back-off value N is equal to 0 or not, and when a judgment result is YES, the transmission node uses the unlicensed carrier for data transmission; and
when the judgment result is NO, the transmission node repeatedly executes random back-off CCA detection in eCCA or the transmission node executes random back-off CCA detection in eCCA and performs the defer period detection when it is detected that the channel is busy, and when the random back-off value N is 0, the transmission node determines that the right to use the unlicensed carrier is acquired.

Furthermore, the method may further include that: in the defer period, the transmission node executes random back-off CCA detection in eCCA, and when it is detected that the channel is idle, the transmission node determines that the right to use the unlicensed carrier is acquired, otherwise repeatedly executes random back-off CCA detection in eCCA until the duration when it is detected that the channel keeps idle reaches the duration of the defer period, wherein a duration of random back-off CCA detection in each eCCA may be 9µs or 10µs.

Furthermore, the operation that the transmission node performs the decrement operation on the random back-off value N may include that:
when it is detected that the channel is idle, the transmission node decrements the random back-off value N by a preset number, wherein the preset number may be dynamically adjusted or kept constant.

Furthermore, when the transmission node directly executes eCCA or executes the random back-off CCA detection process of eCCA, the method may further include that: the transmission node acquires the random back-off value N.

Furthermore, the operation that the transmission node executes single CCA and eCCA for contention-based access may include that:
the transmission node executes single CCA, and when it is detected that the channel is idle, the transmission node determines that the right to use the unlicensed carrier is acquired;
otherwise, if it is detected that the channel is busy, the transmission node performs the eCCA random back-off process, or, performs the defer period detection, and after it is detected in the defer period that the channel is idle, the transmission node performs the eCCA random back-off process;
when it is determined by random back-off CCA detection in eCCA that the channel is idle, the transmission node performs the operation of decrement by the preset number on the random back-off value N, and judges whether the decreased random back-off value N is 0 or not, when a judgment result is YES, the transmission node determines that the right to use the unlicensed carrier is acquired, and when the judgment result is NO, the transmission node executes next random back-off CCA detection; or,
when it is determined by random back-off CCA detection in eCCA that the channel is idle, the transmission node judges whether the random back-off value N is equal to 0 or not, when a judgment result is YES, the transmission node uses the unlicensed carrier for data transmission, and when the judgment result is NO, the transmission node performs the decrement operation on the random back-off value N, and continues executing random back-off CCA detection in eCCA.

Furthermore, the method may further include that:
when it is determined by random back-off CCA detection in eCCA that the channel is busy, the transmission node performs the defer period detection, after it is detected in the defer period that the channel is idle, the transmission node continues executing random back-off CCA detection of eCCA, and when the random back-off value N is decreased to 0, the transmission node determines that the right to use the unlicensed carrier is acquired.

Furthermore, when the transmission node performs the defer period detection, the method may include that:
when it is detected in the defer period that the channel is idle, the operation of decrement by the preset numerical value is not executed on the random back-off value N; or,
when it is detected in the defer period that the channel is idle, the operation of decrement by the preset numerical value is performed on the random back-off value N.

Furthermore, the operation that the operation of decrement by the preset numerical value is performed in the defer period may include that:
when it is detected in the defer period that the channel is idle, the operation of decrement by the preset number is performed on the random back-off value N, wherein the preset decrement number may be a predefined numerical value; or a final preset decrement number of N in case of "idle" in the defer period is determined according to the number of times of preset-duration CCA detection executable in case of "idle" detected in the defer period and the value by which decrement is performed when "idle" is determined by preset-duration CCA detection once; or, random back-off CCA detection is executed for a preset number of times in the defer period, and when it is detected once that the channel is idle, the operation of decrement by the preset numerical value is performed on the random back-off value N.

Furthermore, the method may further include that:
when the transmission node executes random back-off CCA detection in eCCA to determine that the channel is idle, the transmission node uses the unlicensed carrier for data transmission.

Furthermore, the method may further include that:
when the transmission node executes random back-off CCA detection in eCCA to determine that the channel is busy, the transmission node performs the defer period detection, and when it is detected in the defer period that the channel is idle for a preset number of times, the transmission node determines that the right to use the unlicensed carrier is acquired, wherein the preset number of times may be predefined and configured or acquired according to a duration of detection in the defer period and the duration of random back-off CCA detection in eCCA.

Furthermore, when multiple transmission nodes are required to multiplex an unlicensed carrier resource obtained by contention for data transmission together, the method may further include that:
when geographical distances between the multiple transmission nodes are smaller than a preset value and mutual interference is lower than a threshold value, the base station configures the same random back-off value N for the multiple transmission nodes;
when the geographical distances of the multiple transmission nodes are larger than or equal to the preset value and the mutual interference is more than or equal to the threshold value, the multiple transmission nodes generate corresponding random back-off values N respectively; when a symbol boundary is not reached at a moment when the random back-off value N corresponding to any transmission node in the multiple transmission nodes is decreased to 0, the any transmission node sends a reserved signal, the reserved signal being used for each transmission node except the any transmission node to recognize for contiguous random back-off; and when a subframe boundary is reached at the moment when the random back-off value N corresponding to the any transmission node in the multiple transmission nodes is decreased to 0, the transmission node of which the corresponding random back-off value N is not decreased to 0 in the multiple transmission nodes is not allowed to multiplex the unlicensed carrier resource or the transmission node successfully acquiring the unlicensed carrier reserves a specific CCA detection frequency-domain resource, for the transmission nodes of which the value N is not decreased to 0 to recognize and multiplex the resource.

Furthermore, the operation that the any transmission node sends the reserved signal may include that:
the any transmission node sends the reserved signal containing preset recognition information on a full bandwidth, the preset recognition information including at least one of: a cell Identifier (ID), a group ID and an operating company ID; and the any transmission node sends a reserved signal with a specific frequency-domain pattern.

Furthermore, the method may further include that:
the transmission node acquires the right to use the unlicensed carrier, including that:
for LBT with the random back-off window, when the random back-off value N is decreased to 0 when the transmission node executes LBT with the random back-off window in the preset number of configured OFDM symbols, the transmission node acquires the right to use the unlicensed carrier, wherein that the random back-off value N is decreased to 0 may include that the random back-off value N is decreased to 0 in the defer period; or,
for LBT with the random back-off window, if it is detected by random back-off CCA detection that the channel is idle once or for multiple times when the transmission node executes LBT with the random back-off window in the preset number of configured OFDM symbols or the random back-off value N is not decreased to 0 when the transmission node executes till a boundary of the preset number of OFDM symbols, a zero setting operation is forcibly performed on the random back-off value N, and the transmission node determines that the right to use the unlicensed carrier is acquired; or the random back-off value N of the transmission node of which the random back-off value N is not decreased to 0 is frozen for use during the next contention-based access;
for an LBT process without the random back-off window, when the transmission node executes single CCA detection to determine that the channel is idle, the transmission node acquires the right to use the unlicensed carrier; or,
for the LBT process without the random back-off window, when it is determined by one detection in multiple single CCA detections executed by the transmission node that the channel is idle, the transmission node acquires the right to use the unlicensed carrier.

Furthermore, the location where LBT is executed, the CCA detection time period, the LBT mechanism, the corresponding parameter of the LBT mechanism, or, the number of the symbols configured to execute CCA detection may be acquired in at least one of the following manners:
notification to the UE by the base station through the DCI; predefinition; configuration in the subframe structure ratio manner; or dynamic notification to the UE by the base station according to the load condition.

Furthermore, the CCA detection or LBT location may be last one or more OFDM symbols of the previous subframe of the scheduling subframe.

According to the disclosure, a device configured for contention-based access is further provided, which may include:
an acquisition unit, arranged to acquire predefined information; and
an access unit, arranged to perform contention-based access according to the predefined information,
wherein the predefined information may include at least one of: a frame structure, a data transmission subframe location, a data type, dedicated indication signaling, a frame scheduling manner or data transmission.

Furthermore, the frame structure may include: an FDD frame structure; or, a TDD frame structure; or, a dynamically configured UL and DL frame structure.

Furthermore, when the predefined information includes the frame structure, the access unit may specifically be arranged to:
for the FDD frame structure, or, the TDD frame structure, or, the dynamically configured UL and DL frame structure, adopt LBT without a random back-off window or LBT with the random back-off window during contention-based access.

Furthermore, LBT with the random back-off window may include at least one of:
direct execution of eCCA,
execution of single CCA and eCCA, and
execution of eCCA with a defer period;
   and/or,
wherein LBT without the random back-off window may include:
   execution of single CCA only, or,
   execution of single CCA for a preset number of times.

Furthermore, a random back-off value of eCCA may be N, N being a natural number.

Furthermore, when there are multiple contiguous UL subframes in the frame structure, the access unit may specifically be arranged to:
before a first UL subframe, execute an LBT mechanism for contention-based access on configured symbols having a number larger than and/or equal to a predetermined number; and for subsequent UL subframes, execute the LBT mechanism for contention-based access on a last OFDM symbol of a previous subframe of a configured scheduling subframe or a preset frequency-domain resource pattern in the last OFDM symbol, wherein the predetermined number may be configured or predefined by a base station.

Furthermore, when a subframe for executing contention-based access is a special subframe during transmission on the first UL subframe, a preset number of OFDM symbols in a previous subframe of the first UL subframe may include:
a preset number of OFDM symbols in a DwPTS; or,
a preset number of OFDM symbols in a GP; or,
a preset number of OFDM symbols in an UpPTS,
wherein a minimum value of the preset number may be a last OFDM symbol of at least one in the DwPTS, the GP and the UpPTS; and a maximum value of the preset number may correspond to a number of symbols occupied by at least one in the DwPTS, the GP and the UpPTS respectively.

Furthermore, for a transmission burst, a first subframe may execute an LBT mechanism with the random back-off window, and a subsequent subframe may execute the LBT mechanism with the random back-off window; or,
for a transmission burst, a first subframe may execute the LBT mechanism with the random back-off window, and a subsequent subframe may execute an LBT mechanism without the random back-off window.

Furthermore, when there are multiple contiguous UL subframes, the access unit may specifically be arranged to:
no matter whether a previous subframe successfully execute LBT or not, perform, by next subframes, CCA detection according to the LBT mechanism with the random back-off window; or,
no matter whether the LBT mechanism is executed successfully in the previous subframe, perform, by the next subframes, CCA detection according to the LBT mechanism without the random back-off window; or,
when execution of the LBT mechanism is failed in the previous subframe, perform, by the next subframes, CCA detection according to the LBT mechanism with the random back-off window; or,
when execution of the LBT mechanism is failed in the previous subframe, perform, by the next subframes, CCA detection according to the LBT mechanism without the random back-off window; or,
when execution of the LBT mechanism is failed in the previous subframe, perform, by the next subframes, CCA detection according to an LBT mechanism configured by the base station; or,
when execution of the LBT mechanism is failed in the previous subframe, perform, by the next subframes, CCA detection according to the LBT mechanism, configured by the base station, without the random back-off window; or,
when execution of the LBT mechanism is failed in the previous subframe, perform, by the next subframes, CCA detection according to the LBT mechanism, configured by the base station, with the random back-off window; or,
when execution of the LBT mechanism succeeds in the previous subframe, perform, by the next subframes, CCA detection according to the LBT mechanism with the random back-off window; or,
when execution of the LBT mechanism succeeds in the previous subframe, perform, by the next subframes, CCA detection according to the LBT mechanism without the random back-off window.

Furthermore, a duration of single CCA detection may be arranged to be at least one of: 34µs, 25µs, 20µs, 18µs, 16µs, 9µs and 10µs.

Furthermore, a starting point of single CCA detection may be a fixed location or dynamic random location within a configured CCA detection time period.

Furthermore, the configured CCA detection time period may be divided into multiple time intervals.

Furthermore, when the starting location of single CCA detection is the fixed location, the starting location of single CCA detection may be a starting location of a specific time period of the multiple time intervals.

Furthermore, the specific time period, or, the fixed starting location of CCA detection may be determined in at least one of the following manners:
predefinition; notification to UE by the base station through DCI signaling; predetermination by the base station and the UE; or, negotiation between transmission nodes; or, configuration.

Furthermore, when the starting location of single CCA detection is the dynamic random location, the starting location of single CCA detection may be one of:
a location randomly selected from the configured CCA detection time period; or,
a starting location of a time period randomly selected from the multiple time intervals in the configured CCA detection time period; or,
a location randomly selected from the time period randomly selected from the multiple time intervals in the configured CCA detection time period; or,
a location randomly selected from a fixed time period in the multiple time intervals in the configured CCA detection time period.

Furthermore, when single CCA detection is executed to determine that a channel is busy, single CCA detection may be continued to be executed, and when it is detected that a duration when the channel is kept idle is a set single CCA detection duration from a moment when the busy channel gets idle, it may be considered that CCA detection succeeds; or,
single CCA detection may be executed, and if it is detected that the duration when the channel is kept idle is the preset single CCA detection duration, it may be considered that CCA detection succeeds.

Furthermore, when it is determined by single CCA detection that the channel is busy or CCA is failed to be executed,
a starting point of execution of single CCA detection next time may be determined in a manner that one point in the time intervals after the location where single CCA is executed last time is randomly selected as the starting point of execution of single CCA detection; or,
the starting point of execution of single CCA detection next time may be randomly selected from the configured CCA detection time period; or,
the starting point of execution of single CCA detection next time may be determined in a manner that a location where a busy state of the currently detected channel is ended is determined as the starting point of execution of single CCA detection.

Furthermore, in case of asynchrony or synchrony or unfair contention for channel access between transmission nodes, or, in case of unfair contention for channel access between systems, at least one of the following processing may be performed:
priorities or LBT mechanism methods for execution of LBT by the transmission nodes or the systems are adjusted;
starting locations of CCA detection executed by the transmission nodes or the systems are alternately changed; and
the starting locations of CCA detection are randomly selected between the transmission nodes or the systems.

Furthermore, the operation that the priorities or LBT mechanism methods for execution of LBT by the transmission nodes or the systems are adjusted may include at least one of the following operations:
the transmission nodes adjustpriorities or LBT mechanisms for execution of LBT detection this time on the basis of last LBT detection results;
the transmission nodes adjust the priorities or LBT mechanisms for execution of LBT detection this time on the basis of results of LBT detection executed within a period of time;
the transmission nodes adjust the priorities or LBT mechanisms for execution of LBT detection this time on the basis of execution of the LBT mechanisms for a preset number of times; and
the transmission nodes adjust the priorities or LBT mechanisms for execution of LBT detection this time or remain idle for a preset period of time on the basis that an accumulated sum of time when LBT is successfully executed exceeds a preset threshold.

Furthermore, when the transmission nodes successfully execute last LBT, the priorities or LBT mechanisms for execution of LBT detection this time may be decreased; or,
when the transmission nodes fail to execute last LBT, the priorities or LBT mechanisms for execution of LBT detection this time may be increased; or,
when numbers of times for which the transmission nodes successfully execute LBT detection within a period of time are larger than a preset threshold value, the priorities or LBT mechanisms for execution of LBT detection this time may be decreased; or,
when a number of times for which the transmission nodes fail to execute LBT detection within a period of time is larger than a preset threshold value, the priorities or LBT mechanisms for execution of LBT detection this time may be increased.

Furthermore, execution of single CCA detection for the preset number of times may include that:
the preset number of times is obtained by rounding a value obtained by dividing the configured CCA detection time period by the single CCA detection duration, or, is predefined,
during the configured CCA detection time period, a location of each single CCA detection is fixed or dynamic; and
when the location of single CCA detection of each time is dynamic, when it is detected that the channel has kept idle for a preset time within the configured CCA detection time period, it is determined that contention for a right to use an unlicensed carrier succeeds,
wherein the locations of single CCA detection of the preset number of times may be mutually contiguous, or mutually overlapped or mutually discontiguous; when it is determined by single CCA detection that the channel is idle, it may be determined that contention for the right to use the unlicensed carrier succeeds; and when it is determined by single CCA detection that the channel is busy, single CCA detection may be continued to be executed, and when it is detected that the channel is idle, it may be determined that contention for the right to use the unlicensed carrier succeeds.

Furthermore, the transmission node may randomly select the location of each single CCA detection from multiple single CCA detection locations within the configured CCA detection time period, or, may predefine and configure the multiple single CCA detection locations.

Furthermore, execution of eCCA with the defer period may include that:
the defer period is executed at first, and then eCCA is executed; or,
eCCA is executed at first, and when it is detected that the channel is busy, the defer period is executed,
wherein a duration of the defer period may be arranged to be any one of:
   34 µs, 25 µs, 20 µs, 18 µs, 16 µs, 10 µs, 9 µs, 0 µs, an integral multiple of a duration of random back-off CCA detection in eCCA and one of combinations, obtained according to an addition operation, of these options; or
   the duration of random back-off CCA detection in eCCA may be 9 µs or 10 µs.

Furthermore, the operation that the defer period is executed at first and then eCCA is executed may include that:
detection in the defer period is executed, and when it is detected in the defer period that the channel is idle, random back-off CCA detection of eCCA is executed.

Furthermore, when it is detected in the defer period that the channel is idle, an operation of decrement by a preset number may be performed on the random back-off value N, or, no operation may be performed on the random back-off value N,
wherein the preset number may be a predefined numerical value; or, the preset number may be determined according to a number of times of preset-duration CCA detection executable during detection in the defer period and a value by which the random back-off value N is decreased when it is determined once by preset-duration CCA detection that the channel is idle.

Furthermore, when it is detected in the defer period that the channel is busy, the access unit may continue executing CCA detection, and when it is detected that the channel has kept idle for a preset duration of the defer period, determine that the channel is idle during detection in the defer period.

Furthermore, when it is detected in the defer period that the channel is busy, the access unit may continue executing CCA detection, and when it is detected that the channel has kept idle for the preset duration of the defer period, determine that the channel is idle during detection in the defer period.

Furthermore, the data type may include: a new data packet; or, a retransmitted data packet, wherein durations, corresponding to different types of data packets, of execution of parameters involved in the LBT mechanisms may be different.

Furthermore, the duration, corresponding to the retransmitted data packet, of the parameters involved in LBT mechanism execution may be smaller than the duration, corresponding to the new data packet, of the parameters involved in LBT mechanism execution.

Furthermore, the dedicated indication signaling may include that:
the base station configures whether each function of LBT is enabled or not and specific parameters of LBT; or the transmission node determines whether each function of LBT is enabled or not and the specific parameter of LBT,
wherein whether each function of LBT is enabled or not may include: whether to adopt a dynamic exponential back-off window or not, whether to adopt a fixed contention back-off window or not, or whether there is a contention window or not; and the specific parameter of LBT may include at least one of: single CCA, eCCA, the defer period or the random back-off value N, N being a natural number.

Furthermore, the acquisition unit may acquire the specific parameter of LBT in one of the following manners:
the base station notifies the transmission node of the specific parameter for execution of LBT through UL grant information; or,
the transmission node determines the specific parameters of LBT according to a subframe ratio and an OFDM symbols occupied by execution of corresponding LBT; or,
the specific parameters of LBT are predefined, and the transmission node directly acquire the predefined specific parameters of LBT.

Furthermore, the random back-off value N may be obtained in any one of the following manners:
configuration by the base station; presetting; or random generation by the transmission node according to a preset algorithm,
wherein a value range of the value N may be related to a length of the configured CCA detection time period and a size of a contention window.

Furthermore, random generation of the random back-off value N according to the preset algorithm may include that:
a random number N is generated as the random back-off value N through a uniform distribution function; or,
a random number N is generated as the random back-off value N through a binomial distribution function; or,
a random number N is generated as the random back-off value N through a normal distribution function.

Furthermore, the frame scheduling manner may include at least one of: single-frame scheduling, multi-frame scheduling, self-scheduling or cross-carrier scheduling.

Furthermore, the access unit may further be arranged to:
when a base station with data required to be sent executes DL LBT to obtain the right to use the unlicensed carrier by contention and sends DL data and UL grant information to the transmission node, execute, by the transmission node, LBT before sending UL data after receiving the information sent by the base station; or,
after a base station without data to be sent executes DL LBT to obtain the right to use the unlicensed carrier by contention, send a reserved signal to occupy the channel till a moment when the transmission node executes LBT or send indication information to notify the transmission node to execute LBT; or,
when the transmission node has a data service, execute, by the transmission node, LBT according to a preset LBT location; or,
execute, by the transmission node, LBT according to received grant information.

Furthermore, the transmission node may acquire the location where LBT is executed in a semi-static configuration or dynamic configuration manner.

Furthermore, semi-static configuration may include:
configuration through DCI; or, configuration in a subframe structure ratio manner.

Furthermore, dynamic configuration may include that: for the dynamically configured UL and DL frame structure, the base station dynamically notifies the transmission node according to a load condition.

Furthermore, the operation that the transmission node directly executes an eCCA random back-off process for contention-based access or a random back-off CCA detection process of eCCA may include that:
when it is determined by random back-off CCA detection in eCCA that the channel is idle, the transmission node performs a decrement operation on the random back-off value N, the transmission node judges whether the random back-off value N subjected to the decrement operation is equal to 0 or not, if a judgment result is YES, the transmission node uses the unlicensed carrier for data transmission, and if the judgment result is NO, the transmission node executes next random back-off CCA detection; or,
when it is determined by random back-off CCA detection in eCCA that the channel is idle, the transmission node judges whether the random back-off value N is equal to 0 or not, when a judgment result is YES, the transmission node uses the unlicensed carrier for data transmission, and when the judgment result is NO, the transmission node performs the decrement operation on the random back-off value N, and continues executing random back-off CCA detection in eCCA; and
when it is detected that the channel is busy, the transmission node executes next random back-off CCA detection.

Furthermore, the access unit may further be arranged to:
when it is determined by random back-off CCA detection in eCCA that the channel is busy, the transmission node performs the defer period detection, and when it is detected in the defer period that the channel is busy, perform, by the transmission node, next random back-off CCA detection;
whne it is assessed in the defer period that the channel is idle, perform, by the transmission node, the decrement operation on the random back-off value N, judge, by the transmission node, whether the random back-off value N subjected to the decrement operation is equal to 0 or not, when a judgment result is YES, use, by the transmission node, the unlicensed carrier for data transmission, and when the judgment result is NO, execute, by the transmission node, next random back-off CCA detection; or,
when it is assessed in the defer period that the channel is idle, judge, by the transmission node, whether the random back-off value N is equal to 0 or not, when a judgment result is YES, use, by the transmission node, the unlicensed carrier for data transmission, and when the judgment result is NO, perform, by the transmission node, the decrement operation on the random back-off value N, and perform, by the transmission node, next random back-off CCA detection.

Furthermore, the access unit may further be arranged to:
when it is determined by random back-off CCA detection in eCCA that the channel is busy, perform the defer period detection by the transmission node, when it is detected in the defer period that the channel is idle, execute the operation of decrement by the preset number on the random back-off value N, and judge whether the random back-off value N is equal to 0 or not, and when a judgment result is YES, use, by the transmission node, the unlicensed carrier for data transmission; and
when the judgment result is NO, repeatedly execute, by the transmission node, random back-off CCA detection in eCCA or execute, by the transmission node, random back-off CCA detection in eCCA and the defer period detection when it is detected that the channel is busy, and when the random back-off value N is 0, determine, by the transmission node, that the right to use the unlicensed carrier is acquired.

Furthermore, the access unit may further be arranged to: in the defer period, execute, by the transmission node, random back-off CCA detection in eCCA, and when it is detected that the channel is idle, determine, by the transmission node, that the right to use the unlicensed carrier is acquired, otherwise repeatedly execute random back-off CCA detection in eCCA until the duration when it is detected that the channel keeps idle reaches the duration of the defer period, wherein a duration of random back-off CCA detection in each eCCA may be 9µs or 10µs.

Furthermore, the operation that the transmission node performs the decrement operation on the random back-off value N may include that:
when it is detected that the channel is idle, the transmission node decreases the random back-off value N by a preset number, wherein the preset number may be dynamically adjusted or kept constant.

Furthermore, when the transmission node directly executes eCCA or executes the random back-off CCA detection process of eCCA, the access unit may further be arranged to: acquire the random back-off value N.

Furthermore, the operation that the access unit executes single CCA and eCCA for contention-based access may include that:
the transmission node executes single CCA, and when it is detected that the channel is idle, the transmission node determines that the right to use the unlicensed carrier is acquired;
otherwise, when it is detected that the channel is busy, the transmission node performs the eCCA random back-off process, or, performs the defer period detection, and after it is detected in the defer period that the channel is idle, the transmission node performs the eCCA random back-off process;
when it is determined by random back-off CCA detection in eCCA that the channel is idle, the transmission node performs the operation of decrement by the preset number on the random back-off value N, and judges whether the decreased random back-off value N is 0 or not, when a judgment result is YES, the transmission node determines that the right to use the unlicensed carrier is acquired, and when the judgment result is NO, the transmission node executes next random back-off CCA detection; or,
when it is determined by random back-off CCA detection in eCCA that the channel is idle, the transmission node judges whether the random back-off value N is equal to 0 or not, when a judgment result is YES, the transmission node uses the unlicensed carrier for data transmission, and when the judgment result is NO, the transmission node performs the decrement operation on the random back-off value N, and continues executing random back-off CCA detection in eCCA.

Furthermore, the access unit may further be arranged to:
when it is determined by random back-off CCA detection in eCCA that the channel is busy, perform the defer period detection by the transmission node, after it is detected in the defer period that the channel is idle, continue executing, by the transmission node, random back-off CCA detection of eCCA, and when the random back-off value N is decreased to 0, determine, by the transmission node, that the right to use the unlicensed carrier is acquired.

Furthermore, when the transmission node performs the defer period detection, the following operations may be included:
when it is detected in the defer period that the channel is idle, the operation of decrement by the preset numerical value is not executed on the random back-off value N; or,
when it is detected in the defer period that the channel is idle, the operation of decrement by the preset numerical value is performed on the random back-off value N.

Furthermore, the operation that the operation of decrement by the preset numerical value is performed in the defer period may include that:
when it is detected in the defer period that the channel is idle, the operation of decrement by the preset number is performed on the random back-off value N, wherein the preset decrement number may be a predefined numerical value; or a final preset decrement number of N in case of "idle" in the defer period is determined according to the number of times of preset-duration CCA detection executable in case of "idle" detected in the defer period and the value by which decrement is performed when "idle" is determined by preset-duration CCA detection once; or, random back-off CCA detection is executed for a preset number of times in the defer period, and when it is detected once that the channel is idle, the operation of decrement by the preset numerical value is performed on the random back-off value N.

Furthermore, the access unit may further be arranged to:
when the transmission node executes random back-off CCA detection in eCCA to determine that the channel is idle, use, by the transmission node, the unlicensed carrier for data transmission.

Furthermore, the access unit may further be arranged to:
when the transmission node executes random back-off CCA detection in eCCA to determine that the channel is busy, perform the defer period detection by the transmission node, and when it is detected in the defer period that the channel is idle for a preset number of times, determine, by the transmission node, that the right to use the unlicensed carrier is acquired, wherein the preset number of times may be predefined and configured or acquired according to a duration of detection in the defer period and the duration of random back-off CCA detection in eCCA.

Furthermore, when multiple transmission nodes are required to multiplex an unlicensed carrier resource obtained by contention for data transmission together, the access unit may further be arranged to:
when geographical distances between the multiple transmission nodes are smaller than a preset value and mutual interference is lower than a threshold value, configure, by the base station, the same random back-off value N for the multiple transmission nodes;
when the geographical distances of the multiple transmission nodes are larger than or equal to the preset value and the mutual interference is more than or equal to the threshold value, generate, by the multiple transmission nodes, corresponding random back-off values N respectively; when a symbol boundary is not reached at a moment when the random back-off value N corresponding to any transmission node in the multiple transmission nodes is decreased to 0, send, by the any transmission node, a reserved signal, the reserved signal being configured for each transmission node except the any transmission node to recognize for contiguous random back-off; and when a subframe boundary is reached at the moment when the random back-off value N corresponding to the any transmission node in the multiple transmission nodes is decreased to 0, not allow the transmission node of which the corresponding random back-off value N is not decreased to 0 in the multiple transmission nodes to multiplex the unlicensed carrier resource or reserve, by the transmission node successfully acquiring the unlicensed carrier, a specific CCA detection frequency-domain resource, for the transmission nodes of which the value N is not decreased to 0 to recognize and multiplex the resource.

Furthermore, the operation that the any transmission node sends the reserved signal may include that:
the any transmission node sends the reserved signal containing preset recognition information on a full bandwidth, the preset recognition information including at least one of: a cell ID, a group ID and an operating company ID; and the any transmission node sends a reserved signal with a specific frequency-domain pattern.

Furthermore, the access unit may further be arranged to:
acquire, by the transmission node, the right to use the unlicensed carrier, including that:
for LBT with the random back-off window, when the random back-off value N is decreased to 0 when the transmission node executes LBT with the random back-off window in the preset number of configured OFDM symbols, the transmission node acquires the right to use the unlicensed carrier, wherein that the random back-off value N is decreased to 0 may include that the random back-off value N is decreased to 0 in the defer period; or,
for LBT with the random back-off window, if it is detected by random back-off CCA detection that the channel is idle once or for multiple times when the transmission node executes LBT with the random back-off window in the preset number of configured OFDM symbols or the random back-off value N is not decreased to 0 when the transmission node executes till a boundary of the preset number of OFDM symbols, a zero setting operation is forcibly performed on the random back-off value N, and the transmission node determines that the right to use the unlicensed carrier is acquired; or the random back-off value N of the transmission node of which the random back-off value N is not decreased to 0 is frozen for use during the next contention-based access;
for an LBT process without the random back-off window, when the transmission node executes single CCA detection to determine that the channel is idle, the transmission node acquires the right to use the unlicensed carrier; or,
for the LBT process without the random back-off window, when it is determined by one detection in multiple single CCA detections executed by the transmission node that the channel is idle, the transmission node acquires the right to use the unlicensed carrier.

Furthermore, the location where LBT is executed, the CCA detection time period, and/or, the LBT mechanism, the corresponding parameter of the LBT mechanism or the number of the symbols arranged to execute CCA detection may be acquired in at least one of the following manners:
notification to the UE by the base station through the DCI; predefinition; configuration in the subframe structure ratio manner; or dynamic notification to the UE by the base station according to the load condition.

Furthermore, the CCA detection or LBT location may be last one or more OFDM symbols of the previous subframe of the scheduling subframe.

According to the contention-based access method and device provided by the embodiments of the disclosure, an LBT different from that used for DL is adopted, and a flow is simplified when UL LBT is executed, so that the problems of poor UL performance and low spectrum efficiency caused by adoption of DL LBT for UL in the related solutions may be solved.

The other characteristics and advantages of the embodiments of the disclosure will be elaborated in the following specification, and moreover, partially become obvious from the specification, or are understood by implementing the embodiments of the disclosure. The purpose and other advantages of the embodiments of the disclosure may be achieved and obtained through structures specially pointed out in the specification, the claims and the drawings.

### BRIEF DESCRIPTION OF DRAWINGS

The drawings described here are adopted to provide a further understanding to the embodiments of the disclosure, and form a part of the application. Schematic embodiments of the disclosure and descriptions thereof are adopted to explain the disclosure and not intended to form improper limits to the disclosure. In the drawings:
FIG. 1(a) is a first schematic diagram of a contention-based access process in which independent UE contends for a right to use an unlicensed carrier.
FIG. 1(b) is a second schematic diagram of a contention-based access process in which UE under control of a base station contends for a right to use an unlicensed carrier.
FIG. 2(a) is a third schematic diagram of a contention-based access process in which independent UE contends for a right to use an unlicensed carrier.
FIG. 2(b) is a fourth schematic diagram of a contention-based access process in which UE under control of a base station contends for a right to use an unlicensed carrier.
FIG. 3(a) is a fifth schematic diagram of a contention-based access process in which independent UE contends for a right to use an unlicensed carrier.
FIG. 3(b) is a sixth schematic diagram of a contention-based access process in which independent UE contends for a right to use an unlicensed carrier.
FIG. 3(c) is a seventh schematic diagram of a contention-based access process in which UE under control of a base station contends for a right to use an unlicensed carrier.
FIG. 4(a) is an eighth schematic diagram of a contention-based access process in which independent UE contends for a right to use an unlicensed carrier.
FIG. 4(b) is a ninth schematic diagram of a contention-based access process in which independent UE contends for a right to use an unlicensed carrier.
FIG. 4(c) is a tenth schematic diagram of a contention-based access process in which UE under control of a base station contends for a right to use an unlicensed carrier.
FIG. 5(a) is an eleventh schematic diagram of a contention-based access process in which independent UE contends for a right to use an unlicensed carrier.
FIG. 5(b) is a twelfth schematic diagram of a contention-based access process in which UE under control of a base station contends for a right to use an unlicensed carrier.

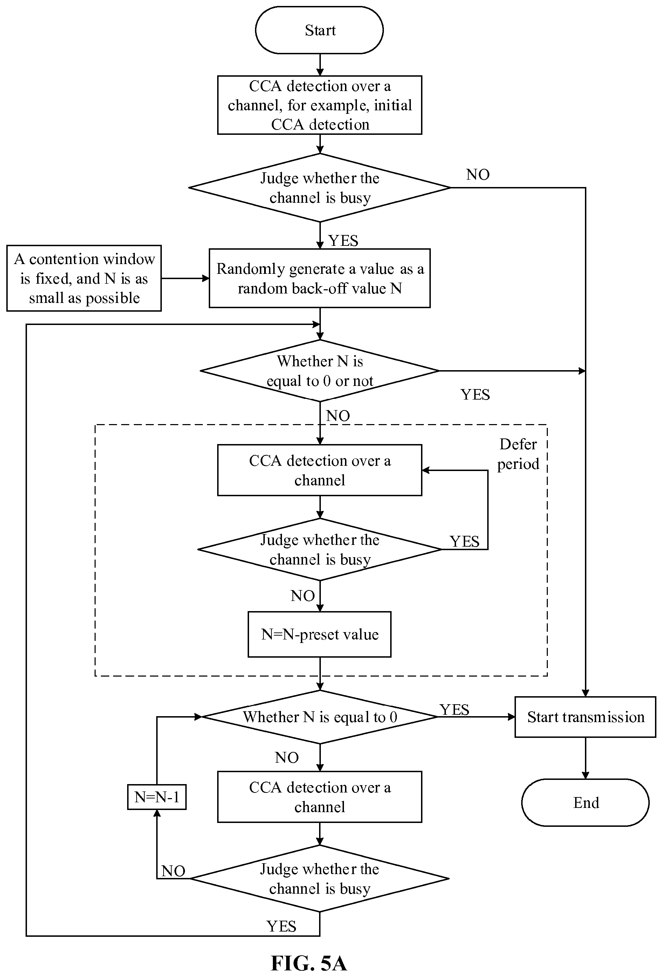

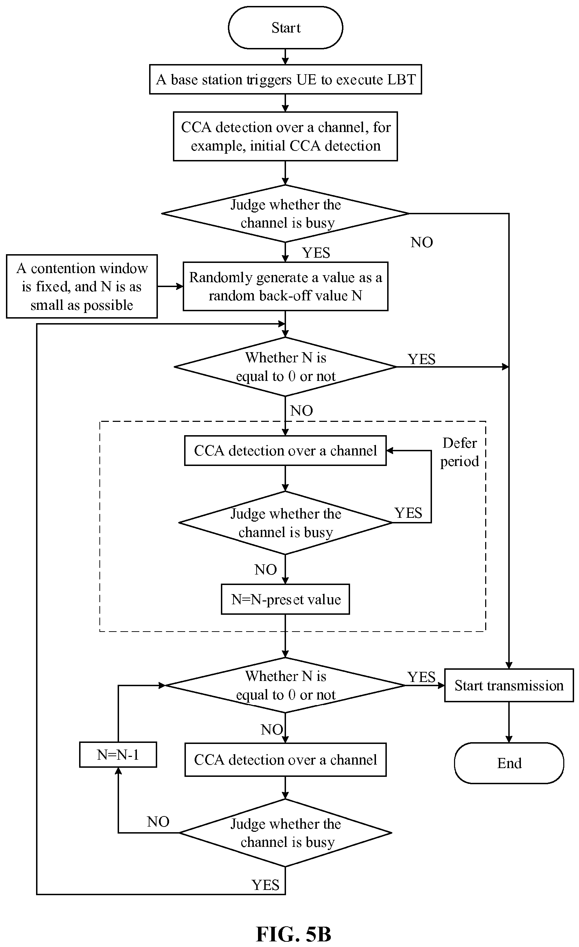

Where the embodiments related to FIGS. 5(a) and 5(b) are not according to the claimed invention and are present for illustration purposes.

### DETAILED DESCRIPTION

In order to make the purpose, technical solutions and advantages of the embodiments of the disclosure clearer, the embodiments of the disclosure will be described below in combination with the drawings in detail. It is to be noted that the embodiments in the application and characteristics in the embodiments may be freely combined without conflicts.

The steps shown in the flowcharts of the drawings may be executed in a computer system, for example, a set of computers, capable of executing instructions. Moreover, although logic sequences are shown in the flowcharts, the shown or described steps may be executed in sequences different from those shown here under some circumstances.

The following embodiments provided by the embodiments of the disclosure mainly introduce a flow of a fast LBT mechanism provided by the embodiments of the disclosure, and the fast LBT mechanism is further optimization to a conventional LBT mechanism in the related art from the aspects of flow complexity and the like, thereby shortening a time for UL channel access, increasing a success rate of channel access and further improving UL system performance. In addition, an LBT process will be introduced with UE as an example in the following embodiments, but is not limited to the UE, or may be applied to a base station side.

### Embodiment One (unclaimed)

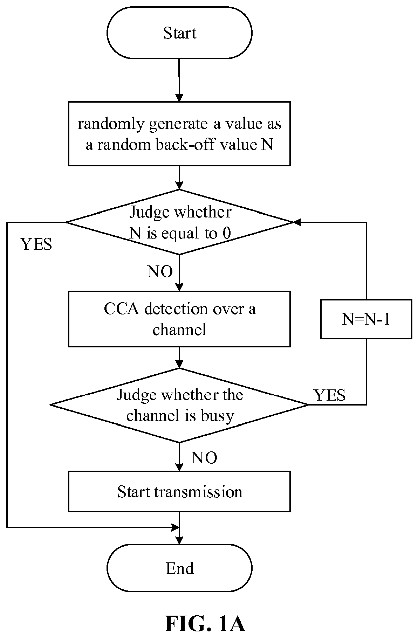

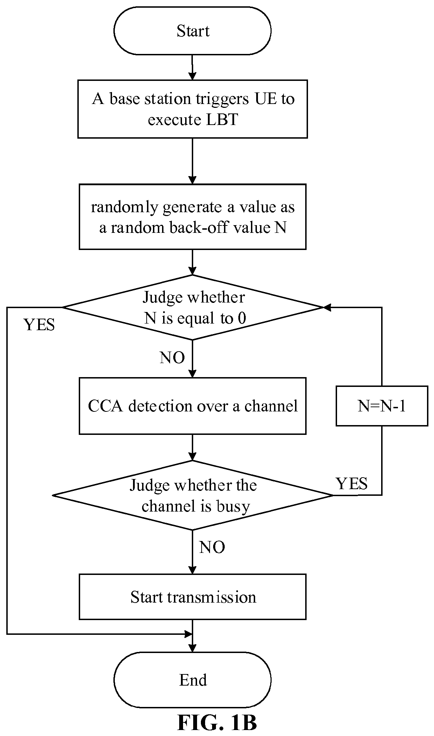

FIG. 1(a) and FIG. 1(b) are schematic diagrams of a contention-based access method for LAA equipment (i.e. a transmission node, the same below) at an unlicensed carrier, where FIG. 1(a) is a schematic diagram of a contention-based access process in which independent UE contends for a right to use an unlicensed carrier, and FIG. 1(b) is a schematic diagram of a contention-based access process in which UE under control of a base station contends for a right to use an unlicensed carrier.

As shown in FIG. 1(a), LAA equipment executes a CCA and eCCA process to acquire a right to use an unlicensed carrier according to the following flow. The LAA equipment is, for example, independent UE, i.e., UE using the unlicensed carrier for autonomous data transmission.

A transmission node acquires a numerical value N, and the numerical value N may be randomly generated, or may be a preset value. N is a natural number, and a maximum value of N is prespecified, or a preset value in a fixed window or a random number in the fixed window, where the value N may be generated by one of the following methods: a random number N is generated through a uniform distribution function; or, a random number N is generated through a binomial distribution function; or, a random number N is generated through a normal distribution function, where the generated random number N is as small as possible.

In Step 1, the transmission node judges whether the current value of N is equal to 0 or not. If a judgment result is YES (that is, N = 0), it is determined that N times of CCA detection of the transmission node has been ended or it is never detected in N times of CCA detection processes that a channel is idle, that is, the transmission node is not allowed to use the unlicensed carrier for data transmission. On the contrary, if the judgment result is NO (that is, N is unequal to 0), the transmission node executes an operation in Step 2.

In Step 2, the transmission node executes one CCA detection (i.e. one in the N CCA detections). If a detection result is "busy", an operation of decrement by a predetermined number is executed on the value of N.A decrement number of the value N is 1, that is, an operation N=N-1 is executed on N, and the transmission node repeatedly executes Step 1. On the contrary, if the detection result is "idle", the transmission node uses the unlicensed carrier for transmission (that is, it is determined that the transmission node executes CCA detection to successfully obtain the right to use the unlicensed carrier by contention).

Detailed descriptions about a contention-based access process of the transmission node in case of multiple contiguous UL subframes will be made below through an application scenario.

The transmission node acquires a numerical value N, specifically including that: N is defined to be a natural number, and the value N is randomly generated through a uniform distribution function or binomial distribution or normal distribution or a magnitude of the value N is preset. When it is detected by only one of N times of CCA detection processes that the channel is idle, the transmission node determines that the right to use the unlicensed carrier is successfully obtained. When the unlicensed carrier is preempted for use next time, the value N is required to be regenerated, where the magnitude of the N is determined by a size of a fixed window, and the size of the fixed window is determined by the number of OFDM symbols available for the UE to execute LBT in a UL subframe. Alternatively, the size of the fixed window is determined by last one or more OFDM symbols in the subframe.

If a location where the transmission node executes an LBT mechanism is an OFDM symbol in the UL subframe (for a normal Cyclic Prefix (CP), an OFDM symbol is about 1/14 ms = 0.0714 ms = 71.4 µs, while for an extended CP, an OFDM symbol is about 1/12ms=0.0833ms=83.3µs), an upper limit of the value of N is obtained by rounding a value obtained by dividing a length of a symbol by a single CCA or eCCA duration, where the single CCA detection duration may be 9 µs, 10 µs, 16 µs, 18 µs, 20 µs or 34 µs. Preferably, the single CCA detection duration is 9 µs. For example, if the single CCA detection duration is 9 µs, for example, for the normal CP, 71 is divided by 9 to get about 7, and then N may be any number between (0,7].

It is to be noted that, when there are multiple contiguous UL subframes in a frame structure, the operation that the transmission node (i.e. the independent UE) performs contention-based access includes that:
for contention-based access of a first UL subframe, an LBT mechanism may be executed on configured symbols in a number larger than and/or equal to a predetermined number, and the LBT mechanism may adopt a conventional LBT mechanism. Alternatively, the transmission node may execute a fast LBT mechanism to contend for accessing the unlicensed carrier on the preset symbols. For contention-based access of a subsequent UL subframe, the same method as the first UL subframe may also be adopted. Preferably, for contention-based access of the subsequent UL subframe, the fast LBT mechanism may be adopted on a last OFDM symbol of a previous subframe of a configured scheduling subframe or a specific frequency-domain resource pattern on the last OFDM symbol, where the predetermined number may be acquired by configuration or predefinition by a base station, and the predetermined number is 1 as a default.

For example, for a scenario of transmission of a user on multiple contiguous UL subframes, if the transmission node performs transmission on subframes #1, #2 and #3, then the UE executes the LBT process introduced in the example on a last OFDM symbol of the subframe #0 or a first OFDM symbol of the subframe #1, and its value N may be randomly generated between 0 and 7, or N is preset to be 7, to provide as multiple as opportunities for the UE to access the channel. If the UE successfully performs data transmission on the subframe #1, the UE may generate a value which is as small as possible between (0,7] or preset a value which is as small as possible on the subframe #2, for example, 1, 2 or 3. This is because the UE has successfully contended for the channel on the first scheduling subframe, and the second scheduling subframe may configure or generate a relatively small random number for fast accessing the channel. Therefore, CCA is preferably executed once on the last OFDM symbol of the first UL subframe or the first OFDM symbol of the second UL subframe. For the former, CCA detection may also be omitted, and an occupancy signal is directly sent at a CCA detection location (the occupancy signal may be a Sounding Reference Signal (SRS) sent on a full bandwidth or an SRS with a certain pattern on a frequency domain, and is used for another piece of UE of the same cell or the same operating company to recognize, thereby multiplexing a resource of the UE succeeding in contention). While for the latter, CCA detection may also be omitted, and data is directly sent. The processing method for the third UL subframe is the same as that for the second UL subframe.

On the contrary, if the UE fails to execute CCA detection and fails to perform data transmission on the first UL subframe, CCA detection is still executed for a preset number of times on the last OFDM symbol of the first UL subframe or the first OFDM symbol of the second UL subframe, so as to ensure and increase a channel access probability of the UE.

On the basis of determination of the value N, the transmission node determines that data transmission may be performed on the unlicensed carrier as long as determining by one of the N single CCA detections that the channel is idle. Specific steps refer to Steps 1 and 2. If a subframe boundary or a symbol boundary is not reached at a moment when it is successfully detected that the channel is idle, a reserved signal of incomplete symbols or complete symbols may be sent or data transmission of part of the symbols may be performed.

As shown in FIG. 1(b), the LAA equipment executes the LBT process to acquire the right to use the unlicensed carrier according to the following flow, where the LAA equipment is UE under control of the base station, where the difference between FIG. 1(b) and (a) is that, before the UE executes UL LBT, the base station with which the UE is associated needs to trigger the UE to execute an contention-based access operation over the unlicensed carrier, and a specific process of triggering the subordinate UE to execute UL LBT is as follows.

At first, the base station triggers the subordinate UE. After contending for the right to use the unlicensed carrier according to a DL LBT mechanism (for example, LBT Cat4) and successfully preempting the unlicensed carrier, a base station with data to be transmitted or receiving a request of the UE sends a UL grant to the subordinate UE for triggering or notifies the UE to execute UL LBT on a certain subframe and a certain OFDM symbol and parameters adopted for execution of LBT through the unlicensed carrier. Or, the base station with the data to be transmitted sends a scheduling message of the subordinate UE and parameter information for execution of UL LBT through a licensed carrier.

Second, the UE receiving the UL grant starts executing the UL LBT process. A specific process is the same as Steps 1 and 2 in FIG. 1(a), that is, the independent UE is replaced with the UE successfully receiving grant information. A method for acquiring the value N may be a manner such as a random generation manner (the uniform distribution function, the binomial distribution function, the normal distribution function and the like) or pre-configuration or specification by the base station notification of the value N.

Furthermore, another preferred solution of FIG. 1(a) and (b) is that: the LAA equipment (the independent UE or the UE under control of the base station) performs CCA detection at first to detect that the channel is idle, performs an operation of decrement by the preset number on the value N, and then judges whether the decreased value N is 0 or not (notes: a minimum value of the random numerical value generated here may be 0), unlike the operations described in FIG. 1(a), that whether the generated value N is 0 or not is directly judged at first and then CCA detection is performed (notes: the minimum value of N is 1 under such a condition), or, CCA detection is performed at first, the value N is judged, then whether the detected channel is idle or not is judged, and if it is idle, the decrement operation is performed on the value N (these operations may cause the condition that CCA detection is executed once more, that is, if the value N has been decreased to 0, the decreased value N is not judged, and instead, next CCA detection is directly performed). LBT flowcharts involved in the embodiments introduced below may also adopt this preferred solution, which will not be repeated below.

### Embodiment Two (unclaimed)

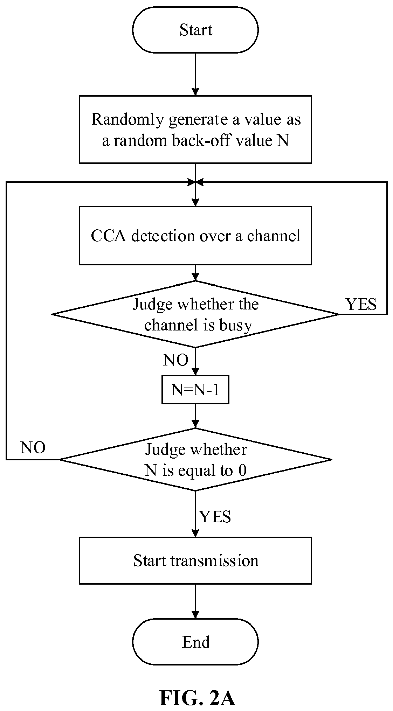

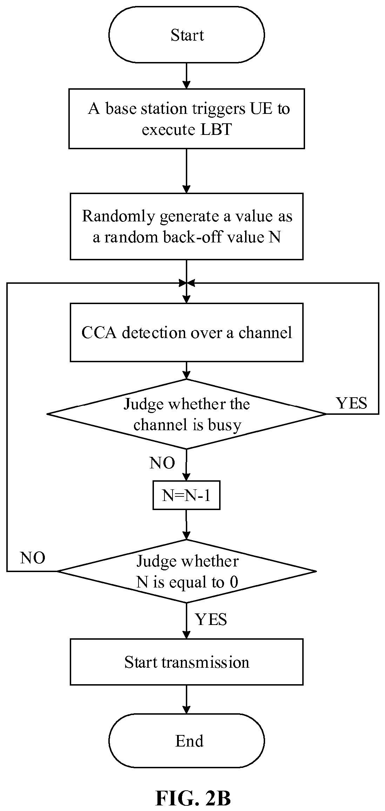

FIG. 2(a) and FIG. 2(b) are schematic diagrams of a contention-based access method for LAA equipment at an unlicensed carrier, wherein FIG. 2(a) is a schematic diagram of a contention-based access process in which a transmission node contends for a right to use an unlicensed carrier, and FIG. 2(b) is a schematic diagram of a contention-based access process in which UE under control of a base station contends for a right to use an unlicensed carri er.

Embodiment One and embodiment Two are similar. The difference is that it is determined that a right to use an unlicensed carrier is acquired only under the condition that UE decreases a value N to 0. Embodiment 2 is similar to a simplified direct eCCA flow. However, when it is determined by random back-off CCA detection of eCCA that a channel is busy, a defer period detection may not be performed, and instead, next random back-off CCA detection is executed until N is decreased to 0.

For FIG. 2(a), LAA equipment (which refers to UE autonomously executing LBT for data transmission without control of a base station in the embodiment, called as independent UE for short) executes an LBT process to acquire the right to use the unlicensed carrier according to the following flow.

A transmission node acquires a numerical value N. The numerical value N may be randomly generated or preset. N is a natural number. A maximum value of N is predefined, or may be implicitly acquired according to a configured LBT detection execution time. When the transmission node preempts the right to use the unlicensed carrier before data transmission of each time, a value N is randomly generated, and after the right to use the unlicensed carrier is successfully obtained for data transmission, when the unlicensed carrier is preempted for use next time, the value N is regenerated. In combination with that the number of OFDM symbols occupied by execution of UL LBT is one or more, preferably, a location of execution of UL LBT detection is on a last OFDM symbol of a subframe (for a normal CP, an OFDM symbol is about 1/14 ms = 0.0714 ms = 71.4 µs, while for an extended CP, an OFDM symbol is about 1/12 ms = 0.0833 ms = 83.3 µs), and that a detection duration when a wireless Access Point (AP)/Station (STA) in a Wireless-Fidelity (WI-FI) system executes random back-off value decrement once is 9 µs or 10 µs, for fair contention with the WI-FI system, an upper limit of the value of N is set to be about a numerical value obtained by rounding a value obtained by a duration of a symbol by a duration of single random back-off detection (the numerical value is about 7).

In Step 1, the transmission node executes CCA detection once, and if a detection result is "busy", the value N is kept unchanged (that is, no decrement operation is performed), and CCA or eCCA detection is continued to be executed. On the contrary, if the detection result is "idle", the transmission node executes a decrement operation on the value N. In the embodiment, a decrement number of the value N is 1, that is, an operation N = N-1 is executed on N. However, every time when being decreased, the value N may also be decreased by another preset value, not limited to 1, and the transmission node executes Step 2.

In Step 2, whether current N is equal to 0 or not is judged. If a judgment result is YES (that is, N = 0), it is determined that the transmission node is about to use the unlicensed carrier for data transmission (that is, it is determined that the independent UE executes CCA or eCCA to successfully acquire the right to use the unlicensed carrier by contention). On the contrary, if the judgment result is NO (that is, N is unequal to 0), the independent UE executes the operation in Step 1.

Or, the operation that whether N is equal to 0 or not is judged in Step 2 is executed before the operation that the random back-off value N is decreased, as follows.

When it is determined by random back-off CCA detection (i.e. one CCA detection) in eCCA that the channel is idle, the transmission node judges whether the random back-off value N is equal to 0 or not, if a judgment result is YES, the transmission node uses the unlicensed carrier for data transmission, and if the judgment result is NO, the transmission node performs the decrement operation on the random back-off value N, and continues executing random back-off CCA detection in eCCA.

When it is detected that the channel is busy, the transmission node executes next random back-off CCA detection.

Detailed descriptions will be made below through an application scenario, for example: a contention-based access process of the transmission node when multiple users all have data to be transmitted, not limited to the following implementation method and scenario.

There is made such a hypothesis that there are three pieces of UE all autonomously perform data transmission processes, wherein UE1 and UE2 are UE in the same cell, and UE3 is UE associated with a different operating company. For fast accessing the unlicensed carrier for data transmission, all of the three pieces of UE adopt the following process to access the channel. Values N obtained by UE1, UE2 and UE3 are 3, 2 and 5 respectively. According to Step 1, the three pieces of UE execute single CCA/eCCA detection, and if it is detected that the channel is idle, the respective values N are decreased by a preset number. The preset number is 1, but not limited to 1. Then, Step 2 is executed, the three pieces of UE judge whether the values N are equal to 0 or not, the UE obtaining a judgment result YES (that is, N = 0) may use the unlicensed carrier for data transmission, and on the contrary, the UE obtaining a judgment result NO enters Step 1.

If it is detected that the channel is busy, the three pieces of UE do not have to perform a defer period, but directly continue executing single CCA/eCCA detection. If N is not decreased to 0 (the values N have been decreased, but are not decreased to 0 when a subframe boundary or a symbol boundary is reached) at configured locations where LBT is executed (for example, last OFDM of subframes) and data transmission may not be performed, the UE may forcibly determine that the channel is idle and perform data transmission. Here, if UE2 detects that the channel is idle for twice and the value N is decreased to 0, if the subframe boundary or the symbol boundary is not reached at a moment when the value N is decreased to 0, a reserved signal is required to be sent. Therefore, the UE (UE1 in the same cell and UE3 associated with different operating companies) continuing executing single CCA/eCCA detection may recognize a content or pattern contained in the reserved signal sent by UE2 to judge whether the unlicensed carrier obtained by contention of UE2 may be multiplexed or not.

As shown in FIG. 2(b), the LAA equipment acquires the right to use the unlicensed carrier according to the flow in the figure, where the LAA equipment is UE under control of a base station. Like FIG. 1(b) and (a) in embodiment one, the difference between FIG. 2(b) and (a) is that, before the UE under control of the base station executes UL LBT, the base station with which the UE is associated has to trigger the UE to execute a contention-based access operation over the unlicensed carrier, and a specific process of triggering the subordinate UE is the same as embodiment one. An execution module is added in the following embodiment 3 (unclaimed) and embodiment 4 on the basis of the LBT flow in embodiment 2, that is, a defer period is added, where a location where the defer period is added may be as follows: one is that: the defer period is executed before eCCA random back-off, that is, eCCA random back-off is executed after the defer period is executed; and the other is that: eCCA random back-off is executed at first, and when it is determined by CCA detection in eCCA random back-off that the channel is busy, the defer period is executed, herein, when it is detected in the defer period that the channel is idle, the operation of decrement by the preset number may be performed on the random back-off value N, or no operation may be performed on the random back-off value N. The preset number may be 1, but is not limited to 1.

### Embodiment Three (unclaimed)

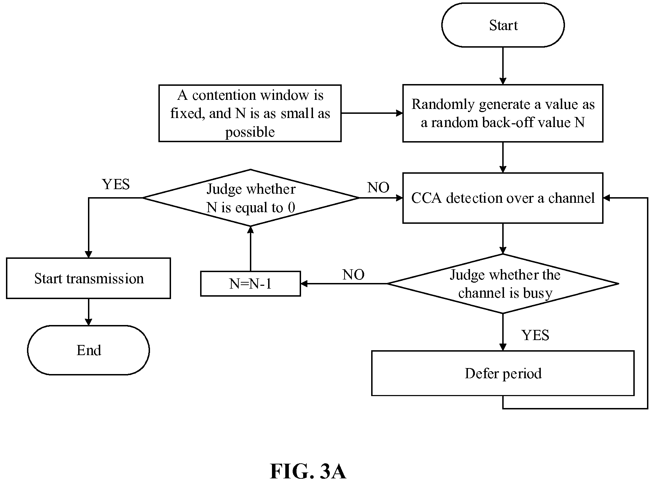

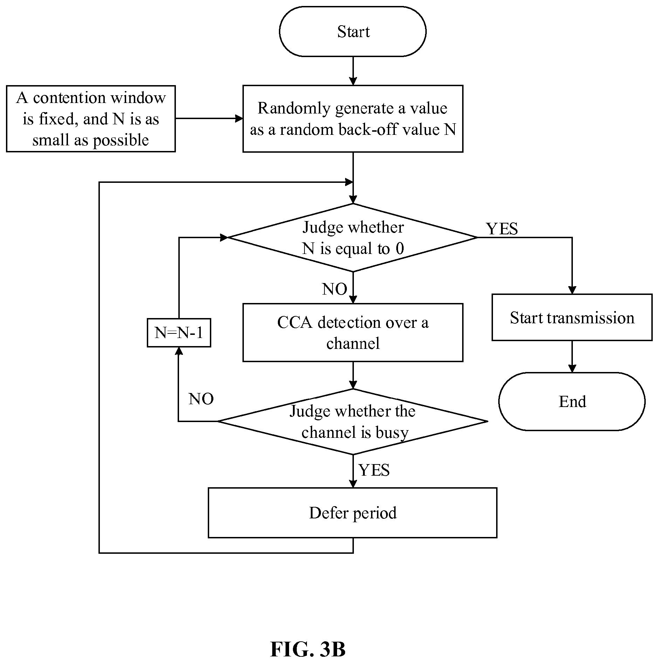

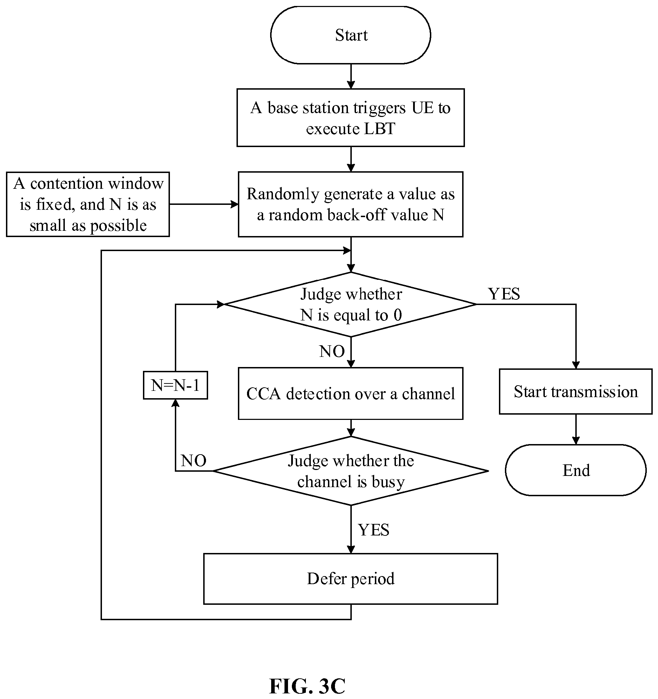

FIG. 3(a), FIG. 3(b) and FIG. 3(c) show a contention-based access method for LAA equipment at an unlicensed carrier in the embodiment, wherein FIG. 3(a) is a schematic diagram of a contention-based access process in which a transmission node contends for a right to use an unlicensed carrier, and FIG. 3(b) is a schematic diagram of a contention-based access process in which UE under control of a base station contends for a right to use an unlicensed carrier. For FIG. 3(a), LAA equipment may be various equipment using the unlicensed carrier, for example, a base station, a low-power small cell or UE autonomously performing data transmission. While for FIG. 3(b), LAA equipment is only UE under control of a base station.

For FIG. 3(a), a specific process that the UE autonomously performing data transmission (i.e. independent UE not under control of a base station, as long as having data to be transmitted, the UE may execute a corresponding UL LBT process, and may perform data transmission after succeeding) acquires a right to use an unlicensed carrier is as follows.

In Step 1, a transmission node executes CCA detection. If it is detected that a channel is busy, the transmission node performs a defer period detection. On the contrary, if it is detected that the channel is idle, the transmission node executes an operation of decrementing N by a preset number once (for example, in the embodiment, the preset number is 1, and N = N-1), where the transmission node in the defer period does not perform any operation on the value N (that is, the value N is frozen in the defer period) when it is detected in the defer period that the channel is idle, and after it is detected that the defer period is idle, the transmission node executes next CCA detection (that is, Step 1 is repeatedly executed).

In Step 2, the transmission node judges whether the decreased value N is equal to 0 or not. If a judgment result is that N is equal to 0, the transmission node determines that the right to use the unlicensed carrier is successfully acquired. On the contrary, if the judgment result is that N is not 0, the transmission node continues executing the operation in Step 1.

Or, on the basis of the method in embodiment 2, the defer period is added.

The transmission node executes CCA detection. If it is detected that the channel is busy, the transmission node performs the defer period detection. On the contrary, if it is detected that the channel is idle, the transmission node judges whether the random back-off value N is equal to 0 or not. If a judgment result is that N is equal to 0, the transmission node determines that the right to use the unlicensed carrier is successfully acquired. On the contrary, if the judgment result is that N is not 0, the transmission node executes the operation of decrementing N by the preset number for once (for example, in the embodiment, the preset number is 1, and N = N-1), and executes next CCA detection.

When the transmission node detects in the defer period that the channel is idle, CCA detection is executed. On the contrary, when the transmission node detects in the defer period that the channel is busy, detection in the defer period is continued to be executed until it is detected that the channel has kept idle for at least a duration of the defer period, and then it is determined that the channel is idle.

The difference between the flowchart of FIG. 3(b) and FIG. 3(a) is that the value N is judged at first, then CCA detection is executed, and the generated value N is minimally 1.

FIG. 3(c) is a specific process that the UE under control of the base station acquires the right to use the unlicensed carrier. FIG. 3(c) is the same as the contention-based access process for the unlicensed carrier in FIG. 3(b), and the difference is that, before the UE executes UL LBT, the base station with which the UE is associated has to trigger the UE. Here, the base station may trigger the UE to execute LBT through self-scheduling or cross-carrier scheduling.

For a self-scheduling condition, before UE performs UL LBT contention, a base station side has to execute DL LBT to obtain the right to use the unlicensed carrier, to send UL grant information to the UE or send a reserved signal containing indication information or the indication information on the unlicensed carrier obtained by contention, so as to trigger the UE to perform a UL LBT operation before UL data transmission, where the UL grant or the reserved signal contains parameters to be used by the UE to perform LBT, for example, CCA detection and a duration, the duration of the defer period or the value N.

For a cross-carrier scheduling condition, before the UE performs UL LBT contention, the base station side has to send information of the specific subframe or OFDM symbol indicated to the UE, the parameters for execution of LBT or the like through a licensed carrier, and the information may be contained in DCI.

For the operation that the LAA equipment acquires the value N in FIG. 3(a), FIG. 3(b) and FIG. 3(c), the value N may be randomly generated by the LAA equipment or configured to the LAA equipment by other equipment, where the value of N is determined according to a size of a fixed contention window or determined according to the number of symbols allocated to the LAA equipment for execution of LBT.

A detailed LBT process will be described below in combination with multi-frame scheduling of multiple pieces of UE with UE under control of a base station as an example.

There is made such a hypothesis that UE1, UE2 and UE3 are sequentially scheduled by a first UL subframe (#2), second subframe (#3) and third subframe (#4), and there is a special subframe S (#1) before the first UL subframe.

The base station notifies through a UL grant that UE1 executes UL LBT in a GP in the subframe #1, UE2 executes LBT on a last OFDM symbol of the subframe #2, and similarly, UE3 executes LBT on a last OFDM symbol of the subframe #3 (corresponding to the former); or, the base station configures that only 13 OFDM symbols are occupied in each subframe during UL transmission and a last symbol is removed or a specific frequency-domain pattern on the last symbol is controlled for scheduling the UE in the next subframe to execute LBT detection (corresponding to the second latter); or, the base station configures that locations where UE1, UE2 and UE3 execute LBT are respectively: the GP in the special subframe; the GP in the special subframe and a last or a specific number of OFDM symbols of the UL subframe #2; and the GP in the special subframe and last or a specific number of OFDM symbols of the UL subframes #2 and #3, which is favorable for UE2 and UE3 to increase probabilities of succeeding in contention (corresponding to the latter), where the specific number may be a number of symbols more than or equal to 1.

For the former, UE1 randomly generates a value N which is as small as possible in a duration of the GP (i.e. a fixed window length), for example, N = 5. From the view of fair coexistence with an AP/STA in a WI-FI system, a duration of random back-off CCA detection in eCCA (eCCA is formed by multiple random back-off CCA) is 9 µs or 10 µs, and a defer period (i.e. defer phase) is 34 µs. According to Step 1, UE1 executes random back-off CCA detection in eCCA, if it is detected that the channel is busy, UE1 performs the defer period detection of which the duration is 34 µs (notes: no decrement operation is performed on the value N within the 34 µs), and after it is detected in the defer period that the channel is idle, UE1 continues repeating random back-off CCA detection in eCCA in Step 1. If it is detected that the channel is idle, the value N is decreased by a preset number (for example, the preset number is 1), that is, N = N-1. Step 2 is executed, whether the decreased value N is 0 or not is judged, and if it is 0, UE1 may use the unlicensed carrier for transmission. If a GP boundary is not reached at a moment when the unlicensed carrier is successfully acquired, UE1 may send a reserved signal, and furthermore, an SRS of UE1 may be sent in an UpPTS (an RSR of a full bandwidth or a specific frequency-domain pattern may be sent), is used by the base station to perform channel measurement in advance, and is used by UE which may perform multiplexing to recognize. For UE2, there is time of only one OFDM symbol to execute LBT, and since UE1 has executed defer of 34 µs once in the defer period of UL LBT, in a UL LBT process of UE2, the duration of the defer period may be dynamically adjusted, and besides 34 µs, may also be adjusted to be 20 µs, 18 µs, 16 µs (a duration of a Short Interframe Space (SIFS)), 9 µs, 10 µs, 0 µs or the like, where the value N in an OFDM is maximally 7 (obtained by rounding a value obtained by dividing a length 71 µs of an OFDM symbol by a duration 9 µs of random back-off CCA detection, the duration of the defer period being 0). A value N randomly generated by UE2 is 5. According to Step 1 in the embodiment, UE2 executes random back-off CCA detection in eCCA, and if it is detected that the channel is busy, UE2 performs the defer period detection of which the duration is adjusted to be 16µs (notes: no decrement operation is performed on the value N in the 16µs). After it is detected in the defer period that the channel is idle, UE2 continues executing random back-off CCA detection in eCCA in Step 1. If it is detected that the channel is idle, the value N is decreased by a preset number (for example, the preset number is 1), that is, N = N-1. Step 2 is executed, whether the decreased value N is 0 or not is judged, and if it is 0, UE2 may use the unlicensed carrier for transmission. If N is not 0, Step 1 is continued to be repeated. If the value N is still not decreased to 0 at another OFDM boundary and the current value N is smaller than an initial value N, N is forcibly set to be 0, and the scheduling subframe of UE2 performs data transmission. Or, after UE2 performs a certain number of defer period detections, the duration of the defer period when the channel is busy in this LBT process may be dynamically adjusted, and may even be configured to be 0. For UE3, on the basis that UE1 and UE2 both use the durations of the defer period, i.e., 34 µs and 16 µs respectively, UE3 may further shorten the duration of the defer period when executing Steps 1 and 2 in the embodiment. In addition, if the base station configures a proper value N according to a location and duration of LBT execution of each piece of UE, the possiblity that the value N is not decreased to 0 on the subframe boundary may further be reduced.

For the latter, UE1, UE2 and UE3 all execute LBT in the GP of the special subframe according to Steps 1 and 2 in the embodiment, where LBT parameters of the three pieces of UE are configured as follows: the random back-off CCA duration is 9 µs or 10 µs, and the defer period is 34 µs. The randomly generated values N are 3, 4 and 5 respectively. If, in the GP, according to a contention-based access manner of Steps 1 and 2, UE1 decreases the value N to 0 at first and the values N of UE2 and UE3 are not 0, at this moment, UE1 may send own SRS (the SRS of the full bandwidth or the specific frequency-domain pattern may be sent), so as for the base station to perform channel measurement in advance and for the equipment in the same cell to recognize and multiplex the resource obtained by contention in a left GP resource or the UpPTS. UE2 and UE3 freeze the current values N, so as to continue decrement in the next CCA detection subframe. For example, UE2 and UE3 continue executing random back-off CCA detection according to the frozen values N on a last or a preset number of OFDM symbols of the subframe #2. If "idle" is detected, the respective values N are decreased, and if the channel is busy, the duration of the defer period configured by the base station, alternatively, a shortened defer period, may be selected, for example: 20 µs, 18 µs, 16 µs (a duration of an SIFS), 9 µs, 10 µs or 0 µs. In this UL LBT process, the duration of the defer period may be fixed, or may be dynamically adjusted, so as to adapt that N is decreased to O at the subframe boundary. If UE2 and UE3 both decrement the values N to 0 on the symbol of the subframe, UE3 sends a reserved signal (which may be, for example, an SRS signal) at an LBT detection location configured by itself to occupy the channel. On the contrary, if UE2 and UE3 decrement the values N to O together with UE1 in the GP, no LBT operation is required to be executed on the symbols in the subframes where CCA detection may be executed by them, and reserved signals (which may be their own's SRSs) are directly sent at LBT detection locations.

An LBT process of multiple pieces of independent UE in multiple frames is the same as the above, and will not be repeated herein. The difference is that the independent UE may perform UL LBT detection according to corresponding frame structures or CCA detection locations configured by a system. The detection process is the same as Steps 1 and 2 in the embodiment, in which when it is determined by random back-off CCA detection that the channel is busy, the duration of the defer period may be dynamically adjusted, or the duration of the defer period may be kept unchanged in an LBT process.

### Embodiment Four

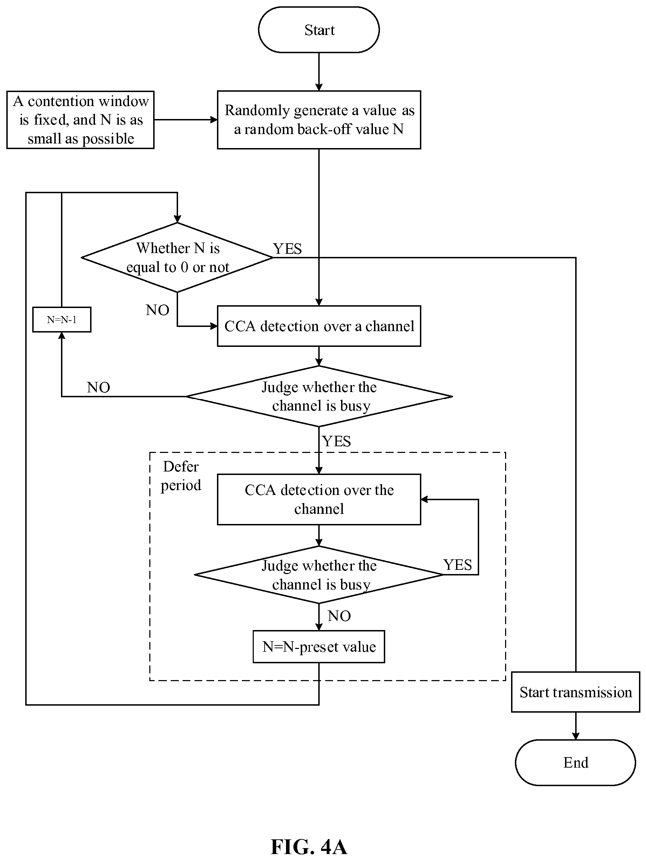

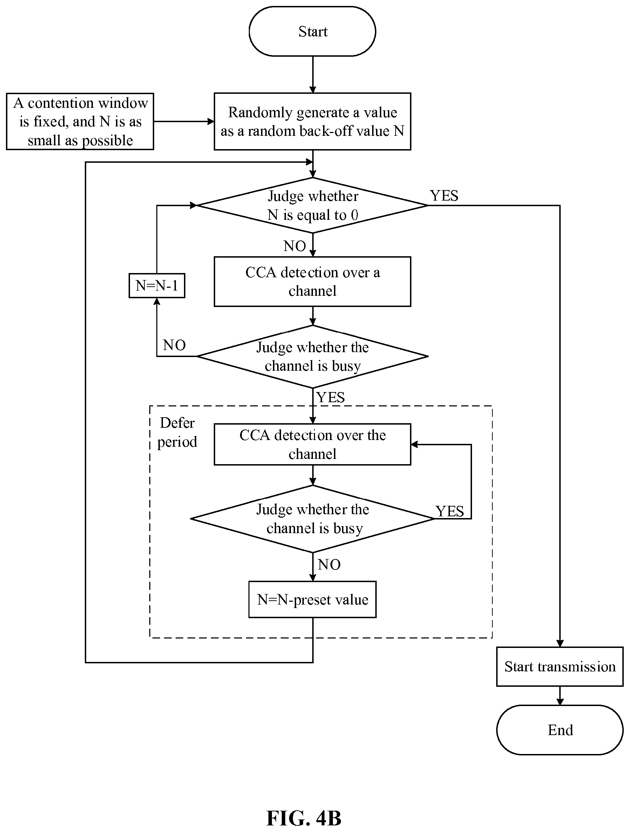

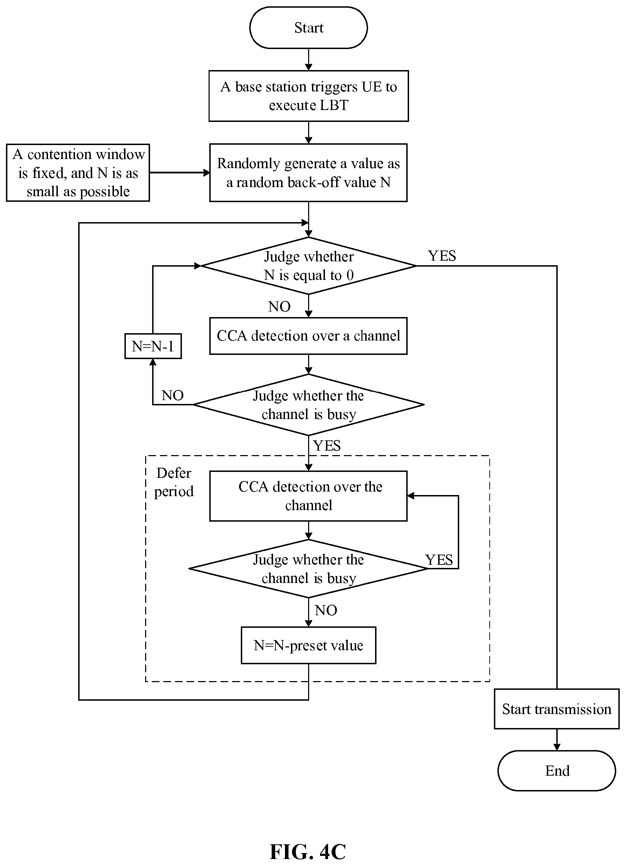

FIG. 4(a), FIG. 4(b) and FIG. 4(c) show a contention-based access method (eCCA+defer period ("idle" is detected and a value N may be decreased)) for LAA equipment at an unlicensed carrier in the embodiment, where FIG. 4(a) is a schematic diagram of a contention-based access process in which a transmission node contends for a right to use an unlicensed carrier; FIG. 4(b) is substantially the same as FIG. 4(a), and the difference is that the value N is judged before random back-off CCA detection is performed, and the randomly generated value N may not be 0. FIG. 4(c) is a schematic diagram of a contention-based access process in which UE under control of a base station contends for a right to use an unlicensed carrier. As shown in FIG. 4, LAA equipment executes an LBT process to acquire a right to use an unlicensed carrier according to the following flow. For FIG. 4(a), the LAA equipment may be various equipment using the unlicensed carrier, for example, a base station, a small cell or UE autonomously performing data transmission. While for FIG. 4(b), LAA equipment is merely UE under control of a base station.

For FIG. 4(a), a specific process that a transmission node (i.e. UE not under control of a base station, as long as having data required to be transmitted, the UE may execute a corresponding UL LBT process, and may perform data transmission after succeeding) acquires a right to use an unlicensed carrier is as follows.

In Step 1, the transmission node executes random back-off CCA detection. If it is detected that a channel is busy, the transmission node executes an operation of decrementing a value N by a preset number. In the embodiment, the preset number is 1, but is not limited to 1.

In Step 2, the transmission node judges whether the decreased value N is 0 or not. If the value N is 0, the transmission node uses the unlicensed carrier for data transmission. On the contrary, if the value N is not 0, next CCA detection is executed.

In Step 3, if it is determined by random back-off CCA detection that the channel is busy in Step 1, the transmission node performs a defer period detection, and operations in the defer period are specifically as follows.

A number of times for which random back-off CCA detection is successfully executed in the defer period may be acquired according to the configured duration of the defer period (the number of the times for which random back-off CCA is successfully executed in the defer period is obtained by rounding a value obtained by dividing the duration of the defer period by a duration of random back-off CCA detection).

Random back-off CCA detection is executed in the defer period, and if it is detected that the channel is idle, the operation of decrement by the preset number is performed on the value N. If it is detected that the channel is busy, random back-off CCA detection is continued to be executed, and only when it is detected that the channel has kept idle for a duration of the defer period, "idle" in the defer period is determined.

If it is detected that the channel is idle in the defer period, the decrement operation is executed on the value N, and if the value N is still not decreased to 0, Step 1 is executed.

Like embodiment Two, in an eCCA process, a sequence of the operation that whether the random back-off value N is equal to 0 or not is judged and the operation of decrementing the random back-off value N by the preset number may be exchanged, as follows.

In Step 1, the transmission node executes random back-off CCA detection. If it is detected that the channel is idle, whether the random back-off value N is equal to 0 or not is judged. If a judgment result is YES, the transmission node acquires the right to use the unlicensed carrier. On the contrary, if the judgment result is NO, the transmission node executes the operation of decrementing the value N by the preset number, and continues executing the operation of Step 1. In the embodiment, the preset number is 1, but is not limited to 1. If it is detected that the channel is busy, Step 2 is executed.

In Step 2, the defer period is executed. If it is detected in the defer period that the channel is idle, whether the random back-off value N is equal to 0 or not is judged, and if a judgment result is YES, the transmission node acquires the right to use the unlicensed carrier. On the contrary, if the judgment result is NO, the transmission node executes the operation of decrementing the value N by the preset number, and Step 1 is executed. In the embodiment, the preset number is 1, but is not limited to 1. If it is detected in the defer period that the channel is busy, detection in the delay period is continued to be executed, and when it is detected that the channel has kept idle for at least the duration of the defer period, it is determined that "idle" is detected in the defer period.

According to the invention, for execution of the defer period before execution of eCCA, Step 2 is executed at first, that is, the defer period is executed, and then the operation of Step 1 is executed.

That is, in Step 1 according to the invention, the defer period is executed. If it is detected in the defer period that the channel is idle, whether the random back-off value N is equal to O or not is judged, and if the judgment result is YES, the transmission node acquires the right to use the unlicensed carrier. On the contrary, if the judgment result is NO, the transmission node executes the operation of decrementing the value N by the preset number, and Step 2 is executed.

In Step 2 according to the invention, the transmission node executes random back-off CCA detection. If it is detected that the channel is idle, whether the random back-off value N is equal to O or not is judged. If the judgment result is YES, the transmission node acquires the right to use the unlicensed carrier. On the contrary, if the judgment result is NO, the transmission node executes the operation of decrementing the value N by the preset number, and continues executing the operation of Step 2. In the embodiment, the preset number is 1, but is not limited to 1. If it is detected that the channel is busy, Step 1 is executed.

Similarly, FIG. 4(b) is a specific process that the UE under control of the base station acquires the right to use the unlicensed carrier, which is the same as the process that the UE contends to access the unlicensed carrier. The difference is that, before the UE executes UL LBT, the base station with which the UE is associated has to trigger the subordinate UE. Here, the base station may trigger the UE to execute LBT by adopting self-scheduling or cross-carrier scheduling.

Detailed descriptions are the same as how the base station triggers the UE to execute UL BLT in embodiment one. In addition, another flow of FIG. 4(c) may be that: the operation that a minimum value of the generated value N is adjusted from 1 to O and whether the value N is O or not is judged is executed after it is determined by random back-off CCA detection of which a duration is 9 µs or 10 µs that the channel is idle and the value N is decreased, and the other processing of the defer period is the same.

In the embodiment, a method by which the LAA equipment acquires the value N is the same as the abovementioned embodiments. Similarly, a channel access flow of the UE in the embodiment may be applied to the conditions that a user is scheduled in a single frame, a single user is scheduled in multiple contiguous subframes, multiple users are scheduled in a single frame and multiple users are scheduled in multiple contiguous subframes. Here, a UL LBT process of UE will be described only with the condition that a single user is scheduled in multiple contiguous subframes as an example.

There is made such a hypothesis that UE1 is scheduled on UL subframes #1, #2 and #3 and a base station configures that UL transmission only occupies first 13 OFDM symbols of each subframe, and a last OFDM symbol of an idle subframe or a specific frequency-domain pattern in the last symbol is configured for next scheduled UE to execute an LBT operation. Since the UE performs a corresponding LBT operation on the basis of scheduling of the base station, the UE may acquire a location and/or parameters for execution of LBT in the following manners.

A first manner: the base station notifies the UE of specific parameters of execution of LBT through UL grant information. If the parameters are determined, a corresponding LBT flow is also determined.

A second manner: the UE may acquire the subframe and/or the location of the symbol for execution of LBT, where the location where the LBT flow is executed may be last one or multiple symbols of the subframe or a specific frequency-domain pattern in the last symbol, or may be the last OFDM symbol of the subframe and a first OFDM symbol of the next subframe.

A third manner: the specific parameters of the LBT flow are implicitly indicated according to a time period configured for execution of an LBT mechanism.

A fourth manner: the specific parameter of execution of LBT on a UE side is predefined, so that the LBT flow is determined.

Acquisition of the value N is the same as the abovementioned embodiments. There is made such a hypothesis that the base station notifies in a UL grant that UE1 is scheduled in the subframe #1 and a UL LBT process is executed in a subframe 0. If the subframe 0 is a special subframe, LBT before transmission in the subframe #1 is executed in a GP of the special subframe. Moreover, according to the following notified LBT parameter conditions: a duration of random back-off CCA detection in eCCA is 9 µs or 10 µs, a duration of the defer period is 34 µs, and it is indicated that a decrement operation may be performed only when the channel is detected in the defer period to be idle, the UE executes the LBT operation according to the flow of FIG. 4(c) in the embodiment in the GP according to the configured parameter information: a numerical value N is randomly generated between [1,M], where M is a size of a contention window, and is related to a length of the GP, for example, N = 13 and M = 10. Whether the value N is 0 or not is judged at first, if it is not 0, random back-off CCA of which the duration is 9 µs or 10 µs is started to be executed, and if a detection result is "idle", the value N is decreased by a preset number (in the embodiment, an operation of decrement by 1, but not limited to 1, is performed on N). Furthermore, whether the decreased value N is 0 or not is judged, at this moment, N = 2 (not 0), random back-off CCA detection is continued to be repeated, if the detection result shows that the channel is busy, UE1 performs the defer period detection, and according to that the configured duration of the defer period is 34 µs and a decrement function in the defer period is enabled, it can be known that "idle" is detected in the defer period and an operation of decrementing the value N by a number of times (i.e., about 4), obtained by rounding a value obtained by dividing the duration 34 µs of the defer period by the duration 9 µs of random back-off CCA, of random back-off CCA may be performed. Once it is detected in the defer period that the channel is idle, the operation of decrementing the value N by a preset value is performed, where a minimum value by which the value N is decreased in the defer period is about 4. Before the decrement operation is performed on the value N, alternatively, the current value N and the minimum value for decrement in the defer period may be judged, and if the current value N is smaller than the minimum value for decrement in the defer period, after "idle" is detected in the defer period, the value N is decreased to 0. On the contrary, if the current value N is larger than the minimum value for decrement in the defer period, after "idle" is detected in the defer period, the operation of decrementing the value N by the preset value is performed (notes: there is made such a hypothesis that "idle" in the defer period is that a preset number of time of preset-duration CCA detections may be decreased, and if the value N may be decreased by 1 when CCA detection succeeds once within a preset duration, when "idle" is detected in the whole defer period, N is finally required to be decreased by (a product of a number of the preset durations executable in the defer period and the decrement number 1 of each time); and it may be learnt about that N is decreased once by a preset number when "idle" is detected once in the defer period). Furthermore, whether the current value N is 0 or not, the steps are repeated, and when the value N is decreased to 0, it is determined that UE1 successfully acquires the right to use the unlicensed carrier.

Under the condition that the subframe 0 is not a special subframe, a duration of execution of UL LBT is a length of only one OFDM symbol. Then, according to a regulation requirement, there must be a 34 µs detection in the LBT process, and thus the duration of the entered defer period is configured to be 34 µs. On such a basis, a left duration in a symbol is 71 µs - 34 µs = 37 µs. Therefore, it may be learn about that a maximum value of N is 4, i.e, a value obtained by dividing 37 µs by the duration of random back-off CCA. According to the parameters and the flow of FIG. 4(c), it can be seen that, when a random back-off CCA detection result is "idle", the operation of decrement by the preset number is performed on the value N. Since there is not so long duration for LBT detection, the preset number may alternatively be 2, that is, when it is detected that the channel is idle for once, the value N is decreased by 2. It facilitates fast decrement of the value N of UE1 to 2 for data transmission. Similarly, when it is detected in the defer period that the channel is idle, the operation of decrementing the value N by 2 is also executed.

If UE1 is scheduled on the next UL subframe #2, since UE1 has successfully contended for the channel and performed data transmission on the subframe #1, at this moment, for enabling UE1 to fast and successfully acquire the right to use the unlicensed carrier, the duration of the defer period may preferably be shortened by 16 µs, or 18 µs, or 0 or the like or kept unchanged (that is, 34 µs is kept unchanged as a default) or single CCA detection is executed only once or for multiple times within a symbol and its duration is adjusted to 18 µs or 20 µs or kept unchanged (that is, 34 µs is kept unchanged as a default) when UE1 detects that the channel is busy on the last symbol of the subframe #1. Similarly, if UE1 is scheduled on the UL subframe #3, the LBT method for the subframe #2 may be adopted. Meanwhile, UE1 may alternatively perform direct transmission on the third subframe continuously scheduled, and does not perform any LBT operation, or executes single CCA only once (the duration may be 34 µs or 20 µs or 18 µs), a reserved signal may be sent for the time left, and alternatively, an SRS is sent.

Similarly, for the condition that symbols occupied by the LBT process executed before the UE performs UL transmission are more than one OFDM symbol or cross the subframe boundaries (the last symbol of the subframe and the first symbol of the next subframe), the abovementioned manner of executing fast LBT in an OFDM symbol may be adopted, and particularly, for an LBT mechanism before the first UL subframe, a conventional LBT flow may be adopted.

A preferred solution of Step 3 in the embodiment will further be given below: if "idle" is detected once by CCA (the duration is 9µs or 10µs) in the defer period, the LAA equipment determines that the right to use the unlicensed carrier is acquired in FIG. 4(a), (b) and (c); or, if it is found that "idle" is detected once by CCA, the value N is decreased by the current value N, thereby decrementing the value N to 0 to acquire the right to use the unlicensed carrier.

Furthermore, another alternative solution is that: when it is detected in the defer period that the channel is idle, if the duration of the defer period is 34 µs, the operation of decrement by 4 may be performed on the value N; and if the value N is not larger than 4 before the defer period, the decrement operation is not performed on the value N even when it is detected in the defer period that the channel is idle.

### Embodiment Five (unclaimed)

This embodiment is not according to the invention and are present for illustration purposes only.

FIG. 5(a), FIG. 5(b) and FIG. 5(c) show a contention-based access method (single CCA+eCCA+defer period ("idle" is detected and a value N may be decreased)) for LAA equipment at an unlicensed carrier in the embodiment. FIG. 5(a) is a schematic diagram of a contention-based access process in which a transmission node contends for a right to use an unlicensed carrier, and FIG. 5(b) is a schematic diagram of a contention-based access process in which UE under control of a base station contends for a right to use an unlicensed carrier. As shown in FIG. 5, LAA equipment executes an LBT process to acquire a right to use an unlicensed carrier according to the following flow, wherein, for FIG. 5(a), the LAA equipment may be various equipment using the unlicensed carrier, for example, a base station, a small cell or UE autonomously performing data transmission. While for FIG. 5(b), LAA equipment is only UE under control of a base station.

For FIG. 5(a), a specific process that a transmission node (i.e. independent UE not under control of a base station, as long as having data to be transmitted, the UE may execute a corresponding UL LBT process, and may perform data transmission after succeeding) acquires a right to use an unlicensed carrier is as follows.

In Step 1, the transmission node executes single CCA. If it is detected that a channel is busy, it is determined that the right to use the unlicensed carrier is obtained and data transmission may be performed. If it is detected that the channel is busy, Step 2 is executed.

In Step 2, if a detection result is "busy", a defer period detection is performed. Operations in the defer period are specifically as follows.

Herein, if it is detected in the defer period that the channel is busy, the transmission node continues executing CCA detection, and when it is detected that the channel has kept idle for a preset defer period duration, it is detected in the defer period that the channel is idle. If it is detected in the defer period that the channel is idle, a value N is decreased by a preset number.

The transmission node judges whether the generated value N is 0 or not. If a judgment result is that N is 0, it is determined that the right to use the unlicensed carrier is successfully obtained. If the judgment result is that N is not 0, random back-off CCA detection (a duration of random back-off CCA is 9 µs) is executed, and if it is determined by random back-off CCA detection that the channel is idle, an operation of decrement by the preset number (for example, decrement by 1) is performed on the value N. If the preset number is 1, N is decreased by 4 in the defer period, but the preset number is not limited to 1.

In Step 3, after the "idle" defer period, whether the current value N is 0 or not is judged. If a judgment result is that the value N is 0, it is determined that the right to use the unlicensed carrier is successfully obtained. On the contrary, if the value N is not 0, the operation of decrement by the preset number is performed on the random back-off value N. Random back-off CCA detection is executed, whether a detection result is "idle" or not is judged, if YES, whether the value N is 0 or not is judged, and if the value N is not 0, the operation of decrement by the preset number is performed on the value N. If the value N is 0, random back-off CCA detection is executed. On the contrary, if the channel is busy, Step 2 is executed. Steps 2 and 3 are repeated, and when the value N is decreased to 0, data transmission is started.

Similarly, a specific process in FIG. 5(b) that the UE under control of the base station acquires the right to use the unlicensed carrier is substantially the same as the process in FIG. 5(a) that the UE contends to access the unlicensed carrier. The difference is that, before the UE executes UL LBT, the base station with which the UE is associated has to trigger the subordinate UE. Here, the base station may trigger the UE to execute LBT by adopting self-scheduling or cross-carrier scheduling. Detailed descriptions are the same as how the base station triggers the UE to execute UL BLT in embodiment one.

Furthermore, a preferred solution of Steps 2 and 3 in (a) and (b) in FIG. 5 is that: Step 3 is omitted, that is, after single CCA detection fails, the defer period detection of Step 2 is directly performed, and when it is detected in the defer period that the channel is idle, the operation of decrement by the preset number is performed on the value N. Since a number of times for which preset-duration CCA detection may be successfully executed in the duration of the defer period has been determined, furthermore, a proper preset decrement number value is configured according to the randomly generated or configured value N, thereby implementing decrement of the value N to 0 in the defer period. If N is decreased to 0, the LAA equipment obtains the right to use the unlicensed carrier.

Furthermore, another preferred solution of Steps 2 and 3 in (a) and (b) in FIG. 5 is that: Step 3 is omitted, that is, after single CCA detection fails, the defer period detection of Step 2 is directly performed, and when it is detected once in the defer period that the channel is idle, it is determined that the LAA equipment obtains the right to use the unlicensed carrier.

Furthermore, another preferred solution of Steps 2 and 3 in (a) and (b) in FIG. 5 is that: the decrement operation over the value N is not executed when it is detected in the defer period in Step 2 that the channel is idle, and in eCCA random back-off detection in Step 3, as long as it is detected once that the channel is idle, it is determined that the LAA equipment obtains the right to use the unlicensed carrier.

In addition, preferably, in (a) and (b) in FIG. 5 and the preferred solutions, a minimum value of the generated value N may be adjusted from 1 to 0, and the operation of judging whether the value N is 0 or not may be executed after single eCCA detection is performed to determine an idle/busy condition of the channel (that is, the value N for each judgement is a value N subjected to the decrement operation).

In the embodiment, a method by which the LAA equipment acquires the value N is the same as the abovementioned embodiments. Similarly, a channel access flow of the UE in the embodiment may be applied to the conditions that a user is scheduled in a single frame, a single user is scheduled in multiple contiguous subframes, multiple users are scheduled in a single frame and multiple users are scheduled in multiple contiguous subframes. Here, a UL LBT process of UE will be described only with the condition that multiple users are scheduled in a single frame as an example.

There is made such a hypothesis that three users, i.e., UE1, UE2 and UE3 respectively, are scheduled on a UL subframe #1. If there is a special subframe before the subframe #1, UE1, UE2 and UE3 execute a UL LBT process according to the steps in FIG. 5(b) in the embodiment in a GP on the special subframe respectively. Since geographical locations of the three pieces of UE are different, different channel detection results may be obtained. If the three pieces of UE detect by single CCA that a channel is busy, a defer period detection is performed, thereby performing random back-off according to different values N generated by the three pieces of UE. If the configured or generated values N are different, according to the flow in the embodiment, when UE1 detects that the channel is idle, the operation of decrementing the value N by a preset number is performed; and UE2 and UE3 detect that the channel is busy due to different interference, and keep the values N unchanged. It is detected in the defer period that the channel is idle, and none of the values N of the three pieces of UE is decreased to 0. At this moment, when it is detected next time that the channel is busy, the users may adjust a duration of the defer period and/or the preset number for decrement over the values N, thereby implementing fast decrement of the value N of each piece of UE to 0 and further using the unlicensed carrier. If there is still a value N having not been decreased to 0 in the three pieces of UE at a boundary of the GP, the UE contending for the unlicensed carrier at first sends a reserved signal containing recognition information or a reserved signal with a specific pattern in an UpPTS for resource multiplexing in the scheduling subframe.

If there is a nonspecial subframe before the subframe #1, locations where the three pieces of UE execute LBT are last one or more OFDM symbols of a previous subframe of the subframe #1, preferably the last one OFDM symbol, or the last OFDM symbol of the previous subframe of the subframe #1 and a first one or more OFDM symbols of the subframe #1. The difference with the former is that, because the number of symbols and duration for execution of the LBT process are limited, it is necessary to generate values N which are as small as possible and adopt the preferred solutions in the embodiment to further increase a speed of access to the unlicensed carrier. For the latter, although the duration of execution of the LBT process is configured, N which is as small as possible should also be selected to enable the equipment to fast and successfully acquire the unlicensed carrier.

Herein, the duration of single CCA may be 34 µs, 25 µs, 20 µs, 16 µs, 18 µs and the like, the duration of the defer period may also be 34 µs, 25 µs, 20 µs, 16 µs, 18 µs or a multiple of 9 µs or 10 µs, and the duration of random back-off CCA is 9 µs or 10 µs. N may be randomly generated or preconfigured. A size of a contention window is fixed, and its size is related to the number of symbols or duration occupied by the LBT process executed by the UE.

Furthermore, an LBT process for each of the conditions that a user is scheduled in a single frame, a single user is scheduled in multiple contiguous subframes, multiple users are scheduled in a single frame and multiple contiguous subframes schedule multiple users may adopt a combination of various flows introduced in the embodiment or independently use one of the flows in the embodiment of the disclosure. Furthermore, for enabling the UE to access the unlicensed carrier faster, single CCA may also be directly executed only once.

### Embodiment Six (unclaimed)

This embodiment is not according to the invention and are present for illustration purposes only.

From the view of fairness for contention of equipment in an LAA system and a node in a WI-FI system for accessing an unlicensed carrier, in the embodiment, a probability of adopting fast LBT for contention-based access is adjusted once after the LAA equipment executes fast LBT provided by the embodiments of the disclosure once or for multiple times (for example, the probability of the equipment in execution of fast LBT is decreased, or existing conventional LBT is executed once).

Specifically, in the embodiment, the LAA equipment (for example, UE) executes a fast LBT process to contend to access the unlicensed carrier according to a location for execution of LBT and corresponding LBT parameter notified by a base station. The LBT parameter is at least one of: single CCA, eCCA, a defer period or a random back-off value N. If the UE in the LAA system adopts fast LBT every time when accessing the unlicensed carrier, there may be a certain contention-based access disadvantage for the node in the WI-FI system, this is because the node in the WI-FI system adopts a conventional LBT contention mechanism. Therefore, for contention-based access fairness between the LAA system and the node in the WI-FI system, after successfully executing fast LBT once, the equipment in the LAA system executes the conventional LBT mechanism once or remains idle for a period of time without contention-based access to the unlicensed carrier; or, after executing fast LBT for multiple times, the equipment in the LAA system executes conventional LBT once or for multiple times or regulates a fast LBT contention-based access probability (decreasing the fast LBT access probability) or remains idle for a period of time without contention-based access to the unlicensed carrier, where the probability of executing the fast LBT mechanism for access may be adjusted through one of the following rules.

A first rule: if the equipment in the LAA system successfully executes fast LBT once, the equipment is adjusted to execute the conventional LBT mechanism once during next contention-based access, that is, fast LBT and conventional LBT mechanisms are alternately used.

A second rule: after the equipment in the LAA system executes fast LBT for the preset period of time or the preset number of times, the equipment decreases the fast LBT contention-based access probability and executes the conventional LBT mechanism once for contention-based access or executes conventional LBT for the preset period of time or remains idle for the preset period of time.

A third rule: if the accumulated time period for which the equipment in the LAA system successfully executes fast LBT exceeds a preset threshold, the equipment decreases the fast LBT contention-based access probability, and executes the conventional LBT mechanism once for contention-based access or executes conventional LBT for the preset period of time or remains idle for the preset period of time.

Specific descriptions will be made with the second rule as an example. There is made such a hypothesis that the preset number of times is 3 (or the preset time is 220 µs). The UE in the LAA system adopts the fast LBT mechanism to access the unlicensed carrier before UL transmission, if it is successfully detected this time that a channel is idle to acquire the right to use the unlicensed carrier, the fast LBT mechanism is still adopted to access the unlicensed carrier during next contention-based access, and if it is detected this time that the channel is busy, there are two different processing forms for calculation of the preset number of times or the preset time: one is that fast LBT is failed to be executed and is not counted in the preset number of times (that is, the preset number of times only accumulates a number of times of successfully executed fast LBT); and the other is that fast LBT is failed to be executed and is counted in the preset number of times (that is, the preset number of times accumulates number of times of fast LBT succeeding and failing in execution). That is, after the preset number of times or the preset time is exceeded, the LAA equipment is required to execute the conventional LBT mechanism similar to the WI-FI system once for contention-based access of execute conventional LBT for the preset period of time or execute conventional LBT for the preset number of times or remains idle for the period of time without participating in contention-based access, so as to ensure a certain channel access probability of the WI-FI system.

For example, for the third rule, there is made such a hypothesis that the preset threshold is 200 µs. The LAA equipment executes the fast LBT contention-based access mechanism on a subframe before a scheduling subframe, for example: a direct random back-off eCCA process is adopted. A value N is 4, a duration of single CCA detection in the eCCA random back-off process is 9 µs, and similarly, there are two processing manners when an accumulated time period for which the fast LBT process is executed exceeds the preset time: one refers to all time (including time when it is determined by single CCA detection that the channel is idle and busy) used for successfully acquiring the right to use the unlicensed carrier by this eCCA random back-off process; and the other refers to calculation of a time when this eCCA random back-off process successfully detects that the channel is idle (i.e. accumulated time for which it is detected for N times that the channel is idle). In case of processing according to the latter, once the accumulated time exceeds the preset threshold (the threshold is a statistical value) during execution of the fast LBT process, the LAA equipment may adopt the conventional LBT mechanism during next contention-based access or adopts the conventional LBT mechanism in a next preset period of time or remains idle for a period of time.

### Embodiment Seven (unclaimed)

This embodiment is not according to the invention and are present for illustration purposes only.

Contention-based access of LAA equipment on a first UL subframe and contention-based access processing on multiple subsequent contiguous UL subframes are mainly introduced in the embodiment. Execution of an LBT mechanism on multiple OFDM symbols before transmission on a first UL subframe is mainly adopted, and the number of symbols for execution of the LBT mechanism before transmission on multiple subsequent contiguous UL subframes may be the same as the number of the symbols for execution of LBT before transmission on the first UL subframe. Preferably, for execution of the LBT mechanism before transmission on the subsequent contiguous UL subframes, only the last OFDM symbol of a previous subframe of the subframes is scheduled. A purpose of this is to enable the LAA equipment to completely avoid surrounding interference or reduce interference to a surrounding node.

Specifically, in the embodiment, there is made such a hypothesis that there are four contiguous UL subframes and UE1, UE2, UE3 and UE4 are sequentially scheduled on the first, second, third and fourth UL subframes. According to a regulation requirement, the LBT mechanism is required to be executed before UL transmission. For UE1, it is necessary to perform channel "idle" detection according to a CCA detection location notified by a base station before data transmission, and here, the CCA detection location notified by the base station is the last M OFDM symbols (M is a positive integer more than or equal to 1) of a previous subframe of the scheduling subframes, for example, M = 4. Moreover, the LBT mechanism may adopt one of four fast LBT manners disclosed by the embodiment of the disclosure. Alternatively, the first UL subframe may adopt a conventional LBT mechanism. Herein, the base station with which UE1 is associated may also notify UE1 that data transmission only occupies 13 OFDM symbols of the scheduling subframe and the last symbol is removed, or, the base station with which UE1 is associated notifies UE1 that only some frequency-domain resources on the last OFDM symbol in the scheduling subframe are kept idle, or, the base station with which UE1 is associated notifies UE1 to remove last M OFDM symbols in the scheduling subframe (that is, the number of the removed symbols is the same as the number of symbols occupied by LBT executed by UE1), for scheduling the UE to perform CCA detection in the next subframe.

Furthermore, UE2 performs channel "idle" detection according to a location, notified by a base station with which it is associated, where the LBT mechanism is executed. Here, the base station notifies UE2 to execute CCA detection on a last symbol of a previous subframe of the scheduling subframes, and the adopted LBT mechanism may adopt one of the four fast LBT mechanisms of the embodiment of the disclosure for channel "idle" detection. Alternatively, the base station notifies UE2 to execute an LBT process on last M symbols of the previous subframe of the scheduling subframes.

Furthermore, UE3 and UE4 also subsequently perform detection at locations where LBT is executed according to the LBT mechanism locations notified by base stations. Preferably, the locations where LBT is executed are both last one OFDM symbols of the previous subframe of the scheduling subframes. One or more OFDM symbols may also be dynamically used for LBT processes according to LBT execution success conditions of the previous UL subframes (if contention-based access of the previous UL subframes fails, more than one symbol resource may be used to execute the LBT processes).

From the above, the base station may configure the last one or more symbols in each UL subframe for execution of LBT. Or, the base station may dynamically configure the locations for execution of LBT in the UL subframes and the number of occupied symbols or specific frequency-domain resources on the last one or more symbols for channel "busy"/"idle" detection.

### Embodiment Eight (unclaimed)

This embodiment is not according to the invention and are present for illustration purposes only.

For solving the problem of unsuccessful contention-based access caused by barring of one piece of LAA equipment due to a fixed timing relationship between different pieces of LAA equipment, the embodiment discloses that CCAis executed once or for multiple times and multiple pieces of equipment under the same operating company all adopt a method of randomly selecting locations of single CCA detection to solve the problem of unfair contention-based access.

On the basis of the problem that one piece of equipment is barred due to a timing relationship between different pieces of LAA equipment, locations where CCA detection is executed may be negotiated between different pieces of LAA equipment or used to be randomly selected. That is, a time period configured by a base station for the LAA equipment to execute LBT is divided into multiple pieces of single CCA detection time, the LAA equipment may randomly select one of the divided multiple single CCA to execute single CCA detection when executing single CCA detection, and if single CCA detection fails this time, for next single CCA detection, one of multiple single CCA after the location where single CCA is executed for the first time may also be randomly selected to execute single CCA detection, where locations where the LAA equipment executes CCA detection for multiple times may be contiguous, discontiguous and overlapped.

Furthermore, when single CCA is executed for multiple times to detect a busy/idle state of a channel, if the LAA equipment detects that the channel is busy between 9µs and 18µs during first single CCA detection (it is supposed that a duration of single CCA detection is 34µs), when it is detected that the channel has kept idle for a set duration of single CCA detection from a moment when the LAA equipment detects a change from "busy" to "idle", it is determined that the LAA equipment successfully acquire a right to use an unlicensed carrier.

Furthermore, the problem that one piece of equipment is barred due to the timing relationship between the different pieces of LAA equipment may be solved by at least one of the following methods.

A first method: a method of increasing a priority, for example: the LAA equipment adjusts a priority for execution of the current LBT detection on the basis of a last LBT detection condition, or adjusts the priority for execution of the current LBT detection on the basis of a result of LBT detection executed within a period of time. For example: if it is detected within a period of time that an LBT failure probability reaches a preset value, the priority for execution of LBT is increased during execution of the current LBT detection.

A second method: alternation of starting locations of execution of CCA detection of the LAA equipment, for example: if a CCA detection location of LAA equipment 1 is always earlier than a CCA detection location of LAA equipment 2, the LAA equipment 1 may always succeed in preempting the channel or has a very high success probability, and the starting locations of execution of CCA of the LAA equipment 1 and 2 may be alternated.

A third method: a method of randomly selecting the starting locations of CCA detection, that is, the LAA equipment selects a location, as earlier as possible, configured for CCA detection for CCA detection during CCA detection.

Furthermore, for the barring problem between different pieces of equipment, different transmission priorities may be configured for file transmission of certain equipment. For example, if files to be transmitted by a certain piece of equipment include a file 1, a file 2, a file 3 and a file 4, it may be configured that a random back-off value selects a number between [A,B] during channel "idle" detection for odd files and the random back-off value N selects a number between [C,D] during channel "idle" detection for even files, wherein A < B < C < D; or, priorities of the equipment for execution of LBT detection within a period of time are adjusted; or, the priorities for execution of LBT may be periodically adjusted or the priorities for LBT are adjusted on the basis of result conditions of execution of LBT within a previous bust.

### Embodiment Nine (unclaimed)

This embodiment is not according to the invention and are present for illustration purposes only.

Adjustment of a process of executing LBT on subsequent UL subframes and the number of occupied symbols according to a success/failure condition of execution of LBT before UL subframe transmission under the condition that there are multiple contiguous UL subframes is mainly introduced in the embodiment.

Specifically, in the embodiment, for an existing frame structure (including TDD and FDD frame structures), there is made such a hypothesis that a present frame structure is TDD and an UL and DL subframe ratio 0 is adopted, there are three contiguous UL subframes under such a ratio and UE1, UE2 and UE3 are scheduled on each subframe respectively. How to execute an LBT mechanism before transmission of each UL subframe when there are three contiguous UL subframes will be specifically described below.

At first, a base station notifies subordinate UE of a location where LBT is executed. The base station notifies the UE of the location where LBT is executed in three manners:
a first manner: the base station notifies the UE that the location where LBT is executed is fixed to be last one or more OFDM symbols of a previous subframe of a scheduling subframe;
a second manner: the base station notifies the UE scheduled in an UL subframe to execute CCA detection on the last multiple OFDM symbols of a previous subframe of the scheduling subframes and the UE scheduled in a subsequent UL subframe to execute CCA detection on the last one OFDM symbol in the scheduling subframe or a specific frequency-domain pattern on the last symbol; and
a third manner: the base station dynamically adjusts the scheduled UE to execute CCA detection on one or more symbols in the previous subframe of the UL scheduling subframes.

Second, the UE scheduled in the first UL subframe performs channel/"idle" detection according to the location, notified by the base station, where LBT is executed and according to a conventional LBT mechanism or according to a fast LBT mechanism (i.e., an LBT mechanism optimized to a certain extent for conventional LBT). On such a basis, the UE scheduled in the subsequent UL subframe may perform LBT detection through one of the following conditions.

A first condition: no matter whether UE1 in the first UL subframe detects whether the channel is idle or not, the UE scheduled in the subsequent UL subframes perform CCA detection according to a fast LBT mechanism.

A second condition: if UE1 in the first UL subframe detects that the channel is busy, UE2 scheduled in the next subframe may perform LBT detection according to one of the following processing:
first processing: UE1 notifies UE2 that it fails to execute LBT, and UE2 may adjust the number of symbols occupied by execution of LBT by itself (for example, a configured duration for execution of LBT is increased), and perform channel "busy"/"idle" detection according to the conventional LBT mechanism, where a notification manner is that UE2 does not detect any data or reserved signal information or indication information or the like in the scheduling subframe of UE1;
second processing: UE2 fails to execute LBT, and then UE2 adopts a fast LBT mechanism for CCA detection according to the location, configured by the base station, where LBT is executed; and
third processing: UE1 fails to execute LBT, and then UE2 adopts the conventional LBT mechanism for CCA detection according to the location, configured by the base station, where LBT is executed; a configured duration occupied by execution of the LBT mechanism may be: a duration of an OFDM symbol, a duration of multiple OFDM symbols or a duration of a subframe.

A third condition: if UE1 in the first UL subframe detects that the channel is idle, UE2 scheduled in the next subframe may perform LBT detection according to one of the following processing:
first processing: UE2 performs CCA detection according to the conventional LBT mechanism, and a value N is as small as possible; and
second processing: UE2 performs CCA detection according to the fast LBT mechanism, and if the random back-off fast LBT mechanism is adopted, the value N should be as small as possible. Preferably, a fast LBT mechanism which is as simplified as possible may be selected, for example: single CCA is executed only once or single CCA detection is executed for multiple times.

Finally, on the basis of an LBT execution result of UE2 in the second UL subframe, the UE scheduled in the next UL subframe may perform LBT detection through one of the following conditions.

A first condition: if UE1 fails to execute LBT (if conventional LBT is failed to be adopted) and UE2 also fails to execute LBT (if conventional LBT is failed to be adopted), UE3 adopts the conventional LBT mechanism for channel detection at the corresponding CCA detection location. Alternatively, time occupied by LBT executed by UE3 may be adjusted according to an LBT execution result of the UE scheduled before (for example, the time occupied by execution of LBT is increased), if the random back-off fast LBT mechanism is adopted, the value N should be as small as possible, and then a success probability of UE3 in contention for the channel may be increased.

A second condition: if UE1 fails to execute LBT (if conventional LBT is failed to be adopted) and UE2 successfully executes LBT (if conventional LBT is successfully adopted), UE3 adopts the fast LBT mechanism for channel detection at the corresponding CCA detection location, where the number of the symbols occupied by the LBT process executed by UE3 is at least a duration of an OFDM symbol. Alternatively, the fast LBT mechanism may adopt execution of single CCA only once or execution of single CCA detection for multiple times. Since UE2 has successfully preempted the channel, UE3 may execute a relatively simplified contention-based access mechanism to fast access the channel for information transmission.

A third condition: if UE1 successfully executes LBT (if conventional LBT is successfully adopted) and UE2 fails to execute LBT (if fast LBT is failed to be adopted), UE3 adopts the conventional LBT mechanism for channel detection at the corresponding CCA detection location, wherein the number of the symbols occupied by LBT executed by UE3 may be a duration of more than or equal to an OFDM symbol, and the value N should be as small as possible.

A fourth condition: if UE1 successfully executes LBT (if conventional LBT is successfully adopted) and UE2 fails to execute LBT (if fast LBT is failed to be adopted), UE3 adopts the fast LBT mechanism for channel detection at the corresponding CCA detection location, and if the random back-off fast LBT mechanism is adopted, the value N should be as small as possible.

A fifth condition: if UE1 successfully executes LBT (if conventional LBT is successfully adopted) and UE2 successfully executes LBT (if fast LBT is successfully adopted), UE3 adopts the fast LBT mechanism for channel detection at the corresponding CCA detection location, and if the random back-off fast LBT mechanism is adopted, the value N should be as small as possible.

From the above, a method for processing for the condition of multiple contiguous UL subframes is that: a number of symbols occupied by LBT executed by the first UL subframe is preferably configured to be a duration of more than or equal to an OFDM symbol; a number of symbols occupied by LBT executed by a subsequent UL subframe is preferably configured to be one OFDM symbol for CCA detection; if the previous UL subframe fails to execute LBT, for LBT of the next subframe, a duration of execution of an LBT process may be increased (if the random back-off LBT mechanism is adopted, the value N should be as small as possible) and the conventional LBT mechanism is executed or fast LBT mechanism is still adopted for execution. On the contrary, if the previous UL subframe successfully executes LBT, the next UL subframe preferably executes according to the fast LBT mechanism.

The method in the embodiment is also applied to a condition of contiguous UL subframes of a frame structure with a flexible UL and DL ratio.

### Embodiment Ten (unclaimed)

This embodiment is not according to the invention and are present for illustration purposes only.

The embodiment of the disclosure further provides a storage medium. Alternatively, in the embodiment, the storage medium may be arranged to store a program code for executing the following steps:
in S1, a transmission node acquires predefined information; and
in S2, the transmission node performs contention-based access according to the predefined information,
where the predefined information includes at least one of: a frame structure, a data transmission subframe location, a data type, dedicated indication signaling, a frame scheduling manner or data transmission.

Alternatively, in the embodiment, the storage medium may include, but not limited to: various media capable of storing program codes such as a U disk, a Read-Only Memory (ROM), a Random Access Memory (RAM), a mobile hard disk, a magnetic disk or an optical disk.

Alternatively, specific examples in the embodiment may refer to the examples described in the abovementioned embodiments and optional implementation modes, and will not be elaborated in the embodiment.

Those skilled in the art should know that each module or each step of the disclosure may be implemented by a universal computing device, and the modules or steps may be concentrated on a single computing device or distributed on a network formed by multiple computing devices, and may optionally be implemented by program codes executable for the computing devices, so that the modules or steps may be stored in a storage device for execution with the computing devices, the shown or described steps may be executed in sequences different from those shown or described here in some circumstances, or may form each integrated circuit module respectively, or multiple modules or steps therein may form a single integrated circuit module for implementation. Therefore, the disclosure is not limited to any specific hardware and software combination.

The above is only the preferred embodiment of the disclosure and not intended to limit the application. For those skilled in the art, the application may have various modifications and variations.

### INDUSTRIAL APPLICABILITY

As mentioned above, the contention-based access method and device provided by the embodiments of the disclosure have the following beneficial effects: LBT different from that used for DL is adopted, and a flow is simplified when UL LBT is executed, so that the problems of poor UL performance and low spectrum efficiency caused by adoption of DL LBT for UL in the related solution may be solved.

## Claims

1. A contention-based access method, comprising:
acquiring, by a transmission node, predefined information; **characterized in that** the predefined information comprises a frame structure; and
performing, by the transmission node, the contention-based access according to the predefined information, **in that**
the frame structure comprises: a dynamically configured Uplink, UL, and/or Downlink, DL frame structure; and
that, for the dynamically configured UL and/or DL frame structure, a mode of the contention-based access adopted by the transmission node is Listen Before Talk, LBT, with a random back-off window, and
that the LBT with the random back-off window comprises execution of evolution clear channel assessment, eCCA, with a defer duration; and
that the execution of eCCA with a defer duration comprises:
executing detection in a defer duration at first, and when it is detected in the defer duration that a channel is idle, then executing random back-off CCA detection of eCCA;
wherein executing the detection in the defer duration at first comprises:
when it is detected in the defer duration that the channel is idle, performing, by the transmission node, a decrement operation on the random back-off value N by a preset number; then executing, by the transmission node, the random back-off CCA detection of eCCA;
wherein executing the random back-off CCA detection of eCCA comprises:
when it is determined by the random back-off CCA detection of eCCA that the channel is idle, judging, by the transmission node, whether the random back-off value N is equal to 0 or not, when the random back-off value N is equal to 0, using, by the transmission node, an unlicensed carrier for data transmission; when the random back-off value N is not equal to 0, performing, by the transmission node, the decrement operation on the random back-off value N by the preset number, and continuing executing random back-off CCA detection in eCCA; or
when it is determined by the random back-off CCA detection of eCCA that the channel is busy, executing, by the transmission node, the detection in the defer duration; when it is detected in the defer duration that the channel is idle, judging, by the transmission node, whether the random back-off value N is equal to 0 or not, when the random back-off value N is equal to 0, using, by the transmission node, the unlicensed carrier for data transmission; when the random back-off value N is not equal to 0, performing, by the transmission node, the decrement operation on the random back-off value N by the preset number, and performing, by the transmission node, next random back-off CCA detection.

2. The method according to claim 1, wherein
the preset number is a predefined numerical value; or, the preset number is determined according to a number of times of preset-duration CCA detection executable during detection in the defer duration and a value by which the random back-off value N is decreased when it is determined once by preset-duration CCA detection that the channel is idle.

3. The method according to claim 1, wherein
when it is detected in the defer duration that the channel is busy, the transmission node continues executing CCA detection, and when it is detected that the channel has kept idle for the preset duration of the defer duration, determines that the channel is idle during detection in the defer duration.

4. The method according to claim 1, wherein performing, by the transmission node, the decrement operation on the random back-off value N by a preset number comprises:
when it is detected that the channel is idle, decrementing, by the transmission node, the random back-off value N by a preset number, wherein the preset number is dynamically adjusted or kept constant.

5. The method according to claim 1, wherein
the random back-off value N is obtained by random generation through a uniform distribution function.

6. A device for contention-based access, comprising:
an acquisition unit, arranged to acquire predefined information, **characterized in that** the predefined information comprises a frame structure; and
an access unit, arranged to perform the contention-based access according to the predefined information, **in that**
the frame structure comprises: a dynamically configured Uplink, UL, and/or Downlink, DL frame structure; and
that, for the dynamically configured UL and/or DL frame structure, a mode of the contention-based access adopted by the access unit is Listen Before Talk, LBT, with a random back-off window, and
that the LBT with the random back-off window comprises execution of evolution clear channel assessment, eCCA, with a defer duration; and
that the execution of eCCA with a defer duration comprises:
executing detection in a defer duration at first, and when it is detected in the defer duration that a channel is idle, executing random back-off CCA detection of eCCA;
wherein executing the detection in the defer duration at first comprises:
when it is detected in the defer duration that the channel is idle, performing, by the transmission node, a decrement operation on the random back-off value N by a preset number; then executing, by the transmission node, the random back-off CCA detection of eCCA;
wherein executing the random back-off CCA detection of eCCA comprises:
when it is determined by the random back-off CCA detection of eCCA that the channel is idle, judging, by the transmission node, whether the random back-off value N is equal to 0 or not, when the random back-off value N is equal to 0, using, by the transmission node, an unlicensed carrier for data transmission; when the random back-off value N is not equal to 0, performing, by the transmission node, the decrement operation on the random back-off value N by the preset number, and continuing executing random back-off CCA detection in eCCA; or
when it is determined by the random back-off CCA detection of eCCA that the channel is busy, executing, by the transmission node, the detection in the defer duration; when it is detected in the defer duration that the channel is idle, judging, by the transmission node, whether the random back-off value N is equal to 0 or not, when the random back-off value N is equal to 0, using, by the transmission node, the unlicensed carrier for data transmission; when the random back-off value N is not equal to 0, performing, by the transmission node, the decrement operation on the random back-off value N by the preset number, and performing, by the transmission node, next random back-off CCA detection.

## Patentansprüche

1. Verfahren für konfliktbasierten Zugriff, umfassend:
Erfassen vordefinierter Informationen durch einen Übertragungsknoten; **dadurch gekennzeichnet, dass** die vordefinierten Informationen eine Rahmenstruktur umfassen; und
Durchführen des konfliktbasierten Zugriffs durch den Übertragungsknoten gemäß den vordefinierten Informationen, dadurch, dass
die Rahmenstruktur Folgendes umfasst: eine dynamisch konfigurierte Uplink-,UL-, und/oder Downlink-,DL-,Rahmenstruktur; und
dass für die dynamisch konfigurierte UL- und/oder DL-Rahmenstruktur ein Modus des konfliktbasierten Zugriffs, der von dem Übertragungsknoten angewendet wird, Listen-Before-Talk, LBT, mit einem zufälligen Backoff-Fenster ist, und
dass LBT mit dem zufälligen Backoff-Fenster Ausführung von Evolution Clear Channel Assessment, eCCA, mit einer Verzögerungsdauer umfasst; und
dass die Ausführung von eCCA mit einer Verzögerungsdauer Folgendes umfasst:
anfängliches Ausführen von Erkennung während einer Verzögerungsdauer und dann, wenn während der Verzögerungsdauer erkannt wird, dass ein Kanal unbelegt ist, Ausführen einer zufälligen Backoff-CCA-Erkennung von eCCA;
wobei das anfängliche Ausführen der Erkennung während der Verzögerungsdauer Folgendes umfasst:
wenn während der Verzögerungsdauer erkannt wird, dass der Kanal unbelegt ist, Durchführen einer Dekrementierungsoperation durch den Übertragungsknoten an dem zufälligen Backoff-Wert N um eine voreingestellte Zahl; dann Ausführen der zufälligen Backoff-CCA-Erkennung von eCCA durch den Übertragungsknoten;
wobei das Ausführen der zufälligen Backoff-CCA-Erkennung von eCCA Folgendes umfasst:
wenn durch die zufällige Backoff-CCA-Erkennung von eCCA bestimmt wird, dass der Kanal unbelegt ist, Beurteilen durch den Übertragungsknoten, ob der zufällige Backoff-Wert N gleich 0 ist oder nicht; wenn der zufällige Backoff-Wert N gleich 0 ist, Verwenden eines nicht lizenzierten Trägers durch den Übertragungsknoten zur Datenübertragung; wenn der zufällige Backoff-Wert N nicht gleich 0 ist, Durchführen der Dekrementierungsoperation durch den Übertragungsknoten an dem zufälligen Backoff-Wert N um die voreingestellte Zahl und Fortfahren mit der Ausführung der zufälligen Backoff-CCA-Erkennung von eCCA; oder
wenn durch die zufällige Backoff-CCA-Erkennung von eCCA bestimmt wird, dass der Kanal belegt ist, Ausführen der Erkennung durch den Übertragungsknoten während der Verzögerungsdauer; wenn während der Verzögerungsdauer erkannt wird, dass der Kanal unbelegt ist, Beurteilen durch den Übertragungsknoten, ob der zufällige Backoff-Wert N gleich 0 ist oder nicht; wenn der zufällige Backoff-Wert N gleich 0 ist, Verwenden des nicht lizenzierten Trägers durch den Übertragungsknoten zur Datenübertragung; wenn der zufällige Backoff-Wert N nicht gleich 0 ist, Durchführen der Dekrementierungsoperation durch den Übertragungsknoten an dem zufälligen Backoff-Wert N um die voreingestellte Zahl und Durchführen der nächsten zufälligen Backoff-CCA-Erkennung durch den Übertragungsknoten.

2. Verfahren nach Anspruch 1, wobei
die voreingestellte Zahl ein vordefinierter numerischer Wert ist; oder die voreingestellte Zahl gemäß einer Anzahl von Malen von während der Erkennung während der Verzögerungsdauer ausführbaren CCA-Erkennungen mit voreingestellter Dauer und einem Wert bestimmt wird, um den der zufällige Backoff-Wert N verringert wird, wenn durch eine CCA-Erkennung mit voreingestellter Dauer einmal bestimmt wird, dass der Kanal unbelegt ist.

3. Verfahren nach Anspruch 1, wobei
der Übertragungsknoten mit der Ausführung der CCA-Erkennung fortfährt, wenn während der Verzögerungsdauer erkannt wird, dass der Kanal belegt ist, und bestimmt, dass der Kanal unbelegt ist, wenn während der Erkennung während der Verzögerungsdauer erkannt wird, dass der Kanal für die voreingestellte Dauer der Verzögerungsdauer unbelegt gehalten wurde.

4. Verfahren nach Anspruch 1, wobei das Durchführen der Dekrementierungsoperation durch den Übertragungsknoten an dem zufälligen Backoff-Wert N um eine voreingestellte Zahl Folgendes umfasst:
wenn erkannt wird, dass der Kanal unbelegt ist, Dekrementieren des zufälligen Backoff-Werts N durch den Übertragungsknoten um eine voreingestellte Zahl, wobei die voreingestellte Zahl dynamisch angepasst oder konstant gehalten wird.

5. Verfahren nach Anspruch 1, wobei
der zufällige Backoff-Wert N durch zufällige Erzeugung über eine Gleichverteilungsfunktion erhalten wird.

6. Vorrichtung für konfliktbasierten Zugriff, umfassend:
eine Erfassungseinheit, die zum Erfassen vordefinierter Informationen ausgelegt ist; **dadurch gekennzeichnet, dass** die vordefinierten Informationen eine Rahmenstruktur umfassen; und
eine Zugriffseinheit, die zum Durchführen des konfliktbasierten Zugriffs gemäß den vordefinierten Informationen ausgelegt ist, dadurch, dass
die Rahmenstruktur Folgendes umfasst: eine dynamisch konfigurierte Uplink-,UL-, und/oder Downlink-,DL-,Rahmenstruktur; und
dass für die dynamisch konfigurierte UL- und/oder DL-Rahmenstruktur ein Modus des konfliktbasierten Zugriffs, der von der Zugriffseinheit angewendet wird, Listen-Before-Talk, LBT, mit einem zufälligen Backoff-Fenster ist, und
dass LBT mit dem zufälligen Backoff-Fenster Ausführung von Evolution Clear Channel Assessment, eCCA, mit einer Verzögerungsdauer umfasst; und
dass die Ausführung von eCCA mit einer Verzögerungsdauer Folgendes umfasst:
anfängliches Ausführen von Erkennung während einer Verzögerungsdauer und, wenn während der Verzögerungsdauer erkannt wird, dass ein Kanal unbelegt ist, Ausführen einer zufälligen Back-off-CCA-Erkennung von eCCA;
wobei das anfängliche Ausführen der Erkennung während der Verzögerungsdauer Folgendes umfasst:
wenn während der Verzögerungsdauer erkannt wird, dass der Kanal unbelegt ist, Durchführen einer Dekrementierungsoperation durch den Übertragungsknoten an dem zufälligen Backoff-Wert N um eine voreingestellte Zahl; dann Ausführen der zufälligen Backoff-CCA-Erkennung von eCCA durch den Übertragungsknoten;
wobei das Ausführen der zufälligen Backoff-CCA-Erkennung von eCCA Folgendes umfasst:
wenn durch die zufällige Backoff-CCA-Erkennung von eCCA bestimmt wird, dass der Kanal unbelegt ist, Beurteilen durch den Übertragungsknoten, ob der zufällige Backoff-Wert N gleich 0 ist oder nicht; wenn der zufällige Backoff-Wert N gleich 0 ist, Verwenden eines nicht lizenzierten Trägers durch den Übertragungsknoten zur Datenübertragung; wenn der zufällige Backoff-Wert N nicht gleich 0 ist, Durchführen der Dekrementierungsoperation durch den Übertragungsknoten an dem zufälligen Backoff-Wert N um die voreingestellte Zahl und Fortfahren mit der Ausführung der zufälligen Backoff-CCA-Erkennung von eCCA; oder
wenn durch die zufällige Backoff-CCA-Erkennung von eCCA bestimmt wird, dass der Kanal belegt ist, Ausführen der Erkennung durch den Übertragungsknoten während der Verzögerungsdauer; wenn während der Verzögerungsdauer erkannt wird, dass der Kanal unbelegt ist, Beurteilen durch den Übertragungsknoten, ob der zufällige Backoff-Wert N gleich 0 ist oder nicht; wenn der zufällige Backoff-Wert N gleich 0 ist, Verwenden des nicht lizenzierten Trägers durch den Übertragungsknoten zur Datenübertragung; wenn der zufällige Backoff-Wert N nicht gleich 0 ist, Durchführen der Dekrementierungsoperation durch den Übertragungsknoten an dem zufälligen Backoff-Wert N um die voreingestellte Zahl und Durchführen der nächsten zufälligen Backoff-CCA-Erkennung durch den Übertragungsknoten.

## Revendications

1. Procédé d'accès à base de conflit, comprenant :
l'acquisition, par un nœud de transmission, d'informations prédéfinies ; **caractérisé en ce que** les informations prédéfinies comprennent une structure de trame ; et
la réalisation, par le nœud de transmission, de l'accès à base de conflit selon les informations prédéfinies, **en ce que**
la structure de trame comprend : une structure de trame de liaison montante, « Uplink » UL, et/ou de liaison descendante, « Downlink » DL, configurée dynamiquement ; et
que, pour la structure de trame de UL et/ou de DL configurée dynamiquement, un mode de l'accès à base de conflit adopté par le nœud de transmission est celui consistant à écouter avant de parler, « Listen Before Talk » LBT, avec une fenêtre de recul de puissance aléatoire, et
que le LBT avec la fenêtre de recul de puissance aléatoire comprend l'exécution d'une évaluation de canal libre à évolution, « evolution Clear Channel Assessment » eCCA, avec une durée de report ; et
que l'exécution de la eCCA avec une durée de report comprend :
l'exécution d'une détection pendant une durée de report au début, et, lorsqu'il est détecté pendant la durée de report qu'un canal est inoccupé, alors l'exécution d'une détection CCA à recul de puissance aléatoire de la eCCA ;
dans lequel l'exécution de la détection pendant la durée de report au début comprend :
lorsqu'il est détecté pendant la durée de report que le canal est inoccupé, la réalisation, par le nœud de transmission, d'une opération de décrément sur la valeur de recul de puissance aléatoire N conformément à un nombre préréglé ; puis l'exécution, par le nœud de transmission, de la détection CCA à recul de puissance aléatoire de la eCCA ;
dans lequel l'exécution de la détection CCA à recul de puissance aléatoire de la eCCA comprend :
lorsqu'il est déterminé, par la détection CCA à recul de puissance aléatoire de la eCCA, que le canal est inoccupé, l'estimation, par le nœud de transmission, du fait que la valeur de recul de puissance aléatoire N est égale à 0 ou non, lorsque la valeur de recul de puissance aléatoire N est égale à 0, l'utilisation, par le nœud de transmission, d'une porteuse sans licence pour une transmission de données ; lorsque la valeur de recul de puissance aléatoire N n'est pas égale à 0, la réalisation, par le nœud de transmission, de l'opération de décrément sur la valeur de recul de puissance aléatoire N conformément au nombre préréglé, et la continuation de l'exécution de la détection CCA à recul de puissance aléatoire dans la eCCA ; ou
lorsqu'il est déterminé, par la détection CCA à recul de puissance aléatoire de la eCCA, que le canal est occupé, l'exécution, par le nœud de transmission, de la détection pendant la durée de report ; lorsqu'il est détecté pendant la durée de report que le canal est inoccupé, l'estimation, par le nœud de transmission, du fait que la valeur de recul de puissance aléatoire N est égale à 0 ou non, lorsque la valeur de recul de puissance aléatoire N est égale à 0, l'utilisation, par le nœud de transmission, de la porteuse sans licence pour une transmission de données ; lorsque la valeur de recul de puissance aléatoire N n'est pas égale à 0, la réalisation, par le nœud de transmission, de l'opération de décrément sur la valeur de recul de puissance aléatoire N conformément au nombre préréglé, et la réalisation, par le nœud de transmission, d'une détection CCA à recul de puissance aléatoire suivante.

2. Procédé selon la revendication 1, dans lequel
le nombre préréglé est une valeur numérique prédéfinie ; ou, le nombre préréglé est déterminé selon un nombre de fois de la détection CCA à durée préréglée exécutables durant la détection pendant la durée de report et une valeur conformément à laquelle la valeur de recul de puissance aléatoire N est réduite lorsqu'il est déterminé une fois par la détection CCA à durée préréglée que le canal est inoccupé.

3. Procédé selon la revendication 1, dans lequel
lorsqu'il est détecté pendant la durée de report que le canal est occupé, le nœud de transmission continue l'exécution de CCA détection, et, lorsqu'il est détecté que le canal est resté inoccupé au cours de la durée préréglée de la durée de report, détermine que le canal est inoccupé durant la détection pendant la durée de report.

4. Procédé selon la revendication 1, dans lequel la réalisation, par le nœud de transmission, de l'opération de décrément sur la valeur de recul de puissance aléatoire N conformément à un nombre préréglé comprend :
lorsqu'il est détecté que le canal est inoccupé, la décrémentation, par le nœud de transmission, de la valeur de recul de puissance aléatoire N conformément à un nombre préréglé, dans lequel le nombre préréglé est ajusté dynamiquement ou maintenu constant.

5. Procédé selon la revendication 1, dans lequel
la valeur de recul de puissance aléatoire N est obtenue par génération aléatoire par le biais d'une fonction de distribution uniforme.

6. Dispositif pour accès à base de conflit, comprenant :
une unité d'acquisition, agencée pour acquérir des informations prédéfinies, **caractérisé en ce que** les informations prédéfinies comprennent une structure de trame ; et
une unité d'accès, agencée pour réaliser l'accès à base de conflit selon les informations prédéfinies, **en ce que**
la structure de trame comprend : une structure de trame de liaison montante, « Uplink » UL, et/ou de liaison descendante, « Downlink » DL, configurée dynamiquement ; et
que, pour la structure de trame de UL et/ou de DL configurée dynamiquement, un mode de l'accès à base de conflit adopté par l'unité d'accès est celui consistant à écouter avant de parler, « Listen Before Talk » LBT, avec une fenêtre de recul de puissance aléatoire, et
que le LBT avec la fenêtre de recul de puissance aléatoire comprend l'exécution d'une évaluation de canal libre à évolution, « evolution Clear Channel Assessment » eCCA, avec une durée de report ; et
que l'exécution de la eCCA avec une durée de report comprend :
l'exécution d'une détection pendant une durée de report au début, et, lorsqu'il est détecté pendant la durée de report qu'un canal est inoccupé, l'exécution d'une détection CCA à recul de puissance aléatoire de la eCCA ;
dans lequel l'exécution de la détection pendant la durée de report au début comprend :
lorsqu'il est détecté pendant la durée de report que le canal est inoccupé, la réalisation, par le nœud de transmission, d'une opération de décrément sur la valeur de recul de puissance aléatoire N conformément à un nombre préréglé ; puis l'exécution, par le nœud de transmission, de la détection CCA à recul de puissance aléatoire de la eCCA ;
dans lequel l'exécution de la détection CCA à recul de puissance aléatoire de la eCCA comprend :
lorsqu'il est déterminé, par la détection CCA à recul de puissance aléatoire de la eCCA, que le canal est inoccupé, l'estimation, par le nœud de transmission, du fait que la valeur de recul de puissance aléatoire N est égale à 0 ou non, lorsque la valeur de recul de puissance aléatoire N est égale à 0, l'utilisation, par le nœud de transmission, d'une porteuse sans licence pour une transmission de données ; lorsque la valeur de recul de puissance aléatoire N n'est pas égale à 0, la réalisation, par le nœud de transmission, de l'opération de décrément sur la valeur de recul de puissance aléatoire N conformément au nombre préréglé, et la continuation de l'exécution de la détection CCA à recul de puissance aléatoire dans la eCCA ; ou
lorsqu'il est déterminé, par la détection CCA à recul de puissance aléatoire de la eCCA, que le canal est occupé, l'exécution, par le nœud de transmission, de la détection pendant la durée de report ; lorsqu'il est détecté pendant la durée de report que le canal est inoccupé, l'estimation, par le nœud de transmission, du fait que la valeur de recul de puissance aléatoire N est égale à 0 ou non, lorsque la valeur de recul de puissance aléatoire N est égale à 0, l'utilisation, par le nœud de transmission, de la porteuse sans licence pour une transmission de données ; lorsque la valeur de recul de puissance aléatoire N n'est pas égale à 0, la réalisation, par le nœud de transmission, de l'opération de décrément sur la valeur de recul de puissance aléatoire N conformément au nombre préréglé, et la réalisation, par le nœud de transmission, d'une détection CCA à recul de puissance aléatoire suivante.
